# EUROPEAN PATENT APPLICATION

(11) **EP 4 318 119 A1**
(43) Date of publication of application: **07.02.2024**
(21) Application number: 21934748.1
(22) Date of filing: 29.03.2021
(51) Int. Cl.: G03B 5/06, G03B 15/00

(54) **IMAGING DEVICE AND IMAGING SYSTEM**

(71) Applicant: NIKON CORPORATION, Minato-ku Tokyo 108-6290 (JP)
(72) Inventor: SHIBAZAKI, Yuichi, Tokyo 108-6290 (JP)
(74) Representative: Hoffmann Eitle
(86) International application number: PCT/JP2021/013188
(87) International publication number: WO 2022/208571

(57) **Abstract**

An imaging device includes a first optical system configured to form an intermediate image of a subject, a second optical system that is an optical system configured to form a final image by re-imaging at least a part of the intermediate image and that is configured to change a magnification of the final image, an imaging element configured to image the final image, and a driving part configured to move the second optical system and the imaging element in a direction intersecting an optical axis of the first optical system.

## Description

### [Technical Field]

The present invention relates to an imaging device, and an imaging system.

### [Background Art]

A camera is attached to a rotary camera platform that can pan and tilt, and the camera is aimed at an object (Patent Document 1).

### [Citation List]

### [Patent Document]

[Patent Document 1]
US Patent No. 4,855,838

### [Summary of Invention]

According to a first aspect, an imaging device includes a first optical system configured to form an intermediate image of a subject, a second optical system that is an optical system configured to form a final image by re-imaging at least a part of the intermediate image and that is configured to change a magnification of the final image, an imaging element configured to image the final image, and a driving part configured to move the second optical system and the imaging element in a direction intersecting an optical axis of the first optical system.

According to a second aspect, an imaging system includes a plurality of the imaging devices according to the first aspect, and at least one imaging device of the plurality of the imaging devices images the subject using information from imaging device different from the at least one imaging device.

### [Brief Description of Drawings]

FIG. 1 is a view schematically showing an imaging device of a first embodiment.
FIG. 2 is a view for describing an imaging region that is an intermediate image and a portion of the intermediate image re-imaged on an imaging element by a second optical system.
FIG. 3 is an enlarged view of parts of a first optical system and a second optical system.
FIG. 4 is a view showing an example of a usage state of an imaging device of the first embodiment.
FIG. 5 is a view showing an example of an image imaged by the imaging device.
FIG. 6 is a view showing another example of an image imaged by the imaging device.
FIG. 7 is a view schematically showing an imaging device of a second embodiment.
FIG. 8 is a view showing an example of a usage state of the imaging device of the second embodiment.
FIG. 9 is a view showing an example of an image imaged by the imaging device of the second embodiment and an image generated by a virtual image generating part.
FIG. 10 is a view showing another example of an image imaged by the imaging device of the second embodiment and an image generated by the virtual image generating part.
FIG. 11 is a view showing a distance measurement part in which a part of an optical system is shared with the first optical system and the second optical system.

### [Description of Embodiments]

In the specification, "image data" refers to data representing a moving image or a still image.

In the specification, "an image" refers to an image visually displayed on a display or the like by the image data.

### (Imaging device of first embodiment)

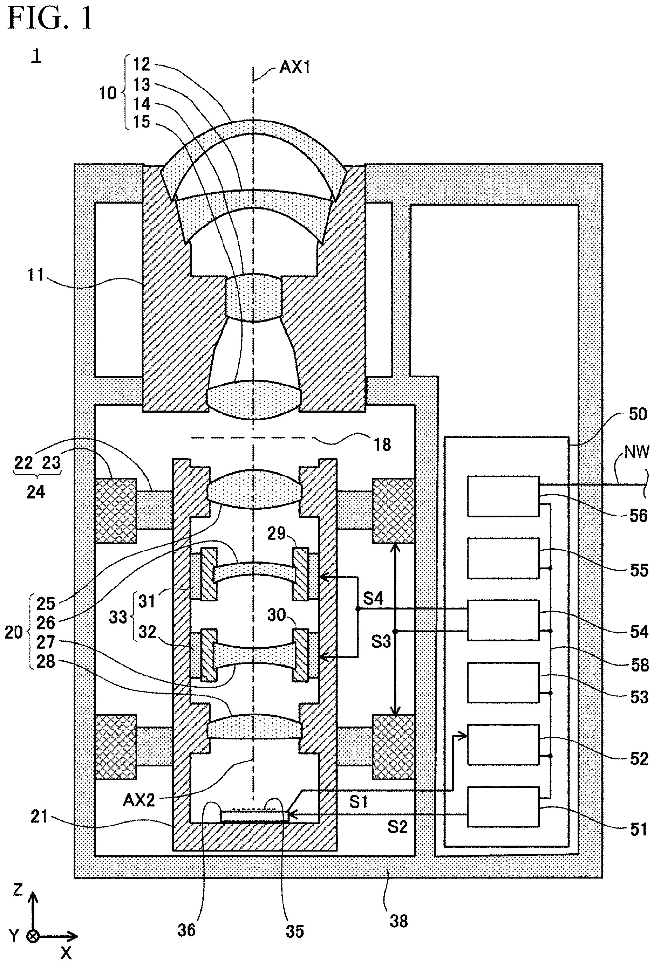

FIG. 1 is a view schematically showing an imaging device 1 of a first embodiment. In an X direction, a Y direction, and a Z direction shown by arrows in FIG. 1, directions shown by the arrows are + directions. The X direction, the Y direction, and the Z direction are directions perpendicular to each other. In addition, hereinafter, a position in the X direction is referred to as an X position, a position in the Y direction is referred to as a Y position, and a position in the Z direction is referred to as a Z position. Further, the X direction, the Y direction, and the Z direction in the drawings referred to as below indicate the same directions as the X direction, the Y direction, and the Z direction shown in FIG. 1.

The imaging device 1 of the first embodiment includes a first optical system 10, a second optical system 20, an imaging element 36, and a controller 50. The first optical system 10 forms an intermediate image 18 of a subject (not shown). The second optical system 20 forms a final image 35 of a subject by re-imaging at least a part of the intermediate image 18 formed by the first optical system 10.

The imaging element 36 having an imaging surface is disposed at a position where the final image 35 of the subject is formed. The imaging surface of the imaging element 36 coincides with the final image 35, and a center of the imaging surface in the X direction and the Y direction substantially coincides with an optical axis AX2 of the second optical system 20. The imaging element 36 is held by a second lens barrel 21.

Further, the imaging surface of the imaging element 36 may not coincide with the image surface of the final image 35 formed by the second optical system 20. For example, the imaging surface of the imaging element 36 and the image surface of the final image 35 formed by the second optical system 20 may be shifted in a direction along the optical axis AX2, and for example, it may be possible to visually recognize the image of the subject on the image generated by imaging of the imaging element 36 or recognize image data of the subject on the image data through conventional image processing.

In addition, a center of the imaging surface of the imaging element 36 in the X direction and the Y direction may not coincide with the optical axis AX2 of the second optical system 20. For example, a center of the imaging surface of the imaging element 36 in the X direction and the Y direction may be shifted with respect to the optical axis AX2 of the second optical system 20. For example, it may be possible to visually recognize the image of the subject on the image generated by imaging of the imaging element 36 or recognize image data of the subject on the image data through conventional image processing.

As an example, an optical axis AX1 of the first optical system 10 and the optical axis AX2 of the second optical system 20 are both parallel to the Z direction. In addition, as an example, an intermediate image surface on which the intermediate image 18 is formed is parallel to an XY plane perpendicular to the Z direction, and a final image surface on which the final image 35 is formed is parallel to the XY plane.

Lenses 12 to 15 that constitute the first optical system 10 are fixed to a first lens barrel 11, and the first lens barrel 11 is fixed to a housing 38 that is an outer frame of the imaging device 1. Further, one or more of the lenses 12 to 15 of the first optical system 10 may not be fixed to the first lens barrel 11 or may be provided to be movable with respect to the first lens barrel 11. In addition, the first lens barrel 11 may not be fixed to the housing 38. Further, if the subject is located at a finite distance with respect to the imaging device 1 (the first optical system 10), the first optical system 10 may have reduced magnification. Further, when the subject is located at infinity with respect to the imaging device 1, a size of the intermediate image 18 (an intermediate image forming region 19) formed by the first optical system 10 may be smaller than a size in a radial direction (a direction to an optical axis) of the optical member closest to the subject among the optical member that constitutes the first optical system 10. In these cases, there is an advantage of reducing the moving stroke of the second optical system 20.

Lenses 25 to 28 that constitute the second optical system 20 are held at the second lens barrel 21 as described below. The second lens barrel 21 is held at the housing 38 via a first driving part 24.

The first driving part 24 includes, as an example, a stator 23 fixed to the housing 38 and a mover 22 fixed to the second lens barrel 21 and movable with respect to the stator 23 in an XY in-plane direction, and is moved in the XY in-plane direction with respect to the housing 38 while holding the second lens barrel 21. That is, the first driving part 24 moves the second optical system 20 and the imaging element 36 supported by the second lens barrel 21 with respect to the first optical system 10 fixed to the housing 38 in the XY in-plane direction. As the first driving part 24 drives the second optical system 20, a center position of a region re-imaged to the imaging element 36 as the final image 35 (i.e., an imaging region) is changed in the intermediate image 18 formed on the intermediate image surface by the first optical system 10.

The first driving part 24 may be a linear motor having the stator 23 and the mover 22 as an example, and may have a configuration having a stepping motor and a lead screw. Further, the first driving part 24 may have a configuration having a stepping motor and a guide bar. Further, the second lens barrel 21 is moved in the XY in-plane direction by the first driving part 24 in a state in which the second optical system 20 and the imaging element 36 are supported such that an optical positional relation between the second optical system 20 and the imaging element 36 (for example, a relative positional relation between the second optical system 20 and the imaging element 36) is not changed.

Further, a direction in which the second lens barrel 21 is moved by the first driving part 24 is not necessarily limited to the XY in-plane direction, and also may be any direction as long as the direction intersects with the Z direction, that is, the direction intersects with the optical axis AX1 of the first optical system 10. In other words, the first driving part 24 may move the second optical system 20 and the imaging element 36 in a direction intersecting the optical axis AX1 of the first optical system 10. Further, the moving direction of the second lens barrel 21 may be a rotational direction, and for example, may be at least one rotational direction of a rotational direction (a θx direction) using an X axis as a center, a rotational direction (a θγ direction) using a Y axis as a center, and a rotational direction (a θz direction) using a Z axis as a center.

In the lenses 25 to 28 that constitute the second optical system 20, the lenses 25 and 28 are fixed to the second lens barrel 21. On the other hand, the lens 26 is supported by a movable support part 29 that is supported by a drive mechanism 31 such as a linear motor or the like to be movable with respect to the second lens barrel 21 in an optical axis direction (as an example, ±Z directions). In addition, the lens 27 is supported by a movable support part 30 that is supported by a drive mechanism 32 such as a linear motor or the like to be movable with respect to the second lens barrel 21 in the optical axis direction (as an example, the ±Z directions).

That is, the lenses 26 and 27 are movable with respect to the lenses 25 and 28 in the optical axis direction by the drive mechanisms 31 and 32. Further, the drive mechanisms 31 and 32 are not limited to the mechanism including the above-mentioned linear motor but may be a moving mechanism having a stepping motor and a lead screw.

Further, the lens 26 may be configured to be movable in both the +Z direction and the -Z direction by the drive mechanism 31, or may be configured to be movable only in either the +Z direction or the -Z direction. In addition, the lens 27 may be configured to be movable in both the +Z direction and the -Z direction by the drive mechanism 32, or may be configured to be movable only in either the +Z direction or the -Z direction.

Hereinafter, the drive mechanisms 31 and 32 are collectively or individually also referred to as "a second driving part 33." As the second driving part 33 drives the lens 26 and the lens 26, the lens 26 and the lens 27 are moved in the Z direction, and an imaging magnification of the second optical system 20 (a magnification of the final image 35 with respect to the intermediate image 18, i.e., a magnification of the final image 35) is changed.

Hereinafter, the second lens barrel 21 that holds the second optical system 20 and the imaging element 36 is also referred to as "a holding part." Further, the second lens barrel 21 may integrally hold the second optical system 20 and the imaging element 36. In addition, the second lens barrel 21 may be integrally formed or may be configured by coupling a plurality of components.

Further, in FIG. 1, while the lenses 12 to 15 and the lenses 25 to 28 are all shown as one lens, they may all be lens groups consisting of a plurality of lenses or may include mirrors, diffractive optical elements, or the like. In addition, the number of the lens groups that constitute the first optical system 10 is not limited to four as shown in the drawings but may be another arbitrary number.

The number of the lens groups that constitute the second optical system 20 is not limited to four shown in the drawings bur may be an arbitrary number of one or more. Further, in the lens groups that constitute the second optical system 20, the number of the lens groups (or lenses) moved in the Z direction by the second driving part 33 is not limited to the above-mentioned two groups but may be another arbitrary number.

The imaging position of the final image 35 may coincide with the imaging surface of the imaging element 36 due to the movement of the lenses 26 and 27 and the like in the optical axis direction by the second driving part 33. Alternatively, a drive mechanism configured to move the lenses 25 and 28 and the like separate from the lenses 26 and 27 moved in the optical axis direction by the second driving part 33 in the optical axis direction may be provided, and the drive mechanism may cause the imaging position of the final image 35 to coincide with the imaging surface of the imaging element 36. Alternatively, a drive mechanism configured to move the imaging element 36 in the optical axis direction may be provided, and the drive mechanism may cause the imaging surface of the imaging element 36 to coincide with the imaging position of the final image 35.

As described above, in the imaging device 1 of the first embodiment, at least a part of the intermediate image 18 of the subject formed by the first optical system 10 is re-imaged by the second optical system 20 to form the final image 35 of the subject on the imaging element 36.

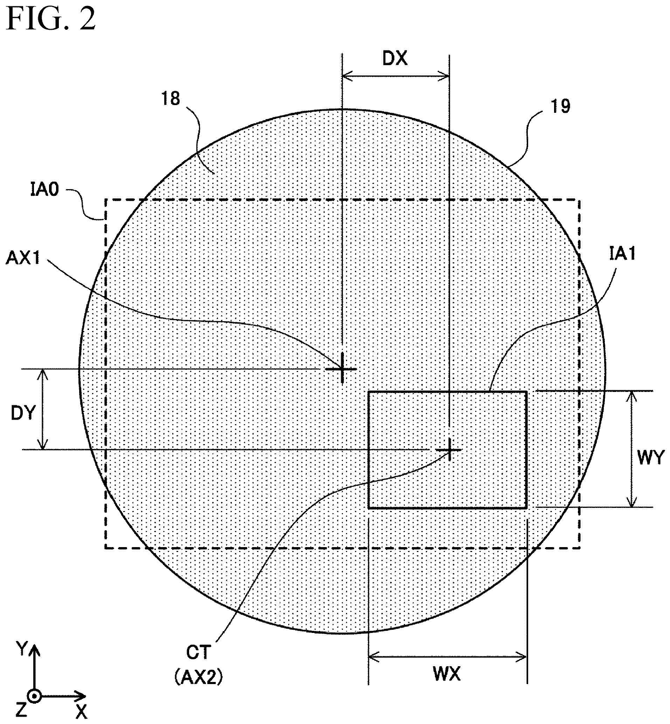

FIG. 2 is a view showing a relation between the intermediate image 18 and an imaging region IA1, which is a part of the intermediate image 18 and which is formed as the final image 35 on the imaging element 36 re-imaged by the second optical system 20, and a view showing the intermediate image 18 in the +Z direction.

The intermediate image 18 of the subject by the first optical system 10 is an imaging region of the first optical system 10 and formed in the intermediate image forming region 19 having a substantially circular shape as an example.

As described above, the imaging region IA1 is a portion of the intermediate image 18 that is re-imaged onto the imaging element 36 as the final image 35, and thus, corresponds to the visual field of the imaging device 1. Accordingly, the imaging region IA1 may be referred to as a visual field region of the second optical system 20.

When the optical axis AX2 of the second optical system 20 coincides with the optical axis AX1 of the first optical system 10 and an imaging magnification of the second optical system 20 (a magnification of the final image 35) is minimized, the second optical system 20 re-images the intermediate image 18 in a rectangular wide visual field imaging region IA0 shown by a broken line on the imaging element 36 as the final image 35.

A center position CT of the imaging region IA1 in the intermediate image 18 re-imaged on the imaging element 36 as the final image 35 is changed as the second lens barrel 21 that holds the second optical system 20 and the imaging element 36 is moved by the first driving part 24. A distance DX in the X direction and a distance DY in the Y direction to the center position CT of the imaging region IA1 with reference to the optical axis AX1 of the first optical system 10 coincide with a distance in the X direction and a distance in the Y direction from the optical axis AX1 of the first optical system 10 to the optical axis AX2 of the second optical system 10, respectively.

In addition, a width WX in the X direction and a width WY in the Y direction that express a size of the imaging region IA1 are changed according to a change of the imaging magnification of the second optical system 20 (the magnification of the final image 35) as the second driving part 33 is driven. The second driving part 33 changes an imaging magnification of the imaging device 1 as a whole by changing the imaging magnification of the second optical system 20.

As described above, since the imaging region IA1 corresponds to a visual field of the imaging device 1, the visual field of the imaging device 1 is changed by driving the first driving part 24 or the second driving part 33. More specifically, a center of the visual field of the imaging device 1 is changed by driving the first driving part 24. In addition, a width of the visual field of the imaging device 1 is changed by driving the second driving part 33.

Further, a size relationship between the wide visual field imaging region IA0 and the intermediate image forming region 19 of the first optical system 10 is not necessarily limited to a relation shown in FIG. 2. For example, the wide visual field imaging region lA0 may include the intermediate image forming region 19 as a whole, and in this case, the entire intermediate image 18 of the first optical system 10 can be re-imaged on the imaging element 36 by the second optical system 20 as the final image 35. Alternatively, on the contrary, the entire wide visual field imaging region IA0 may be included in the intermediate image forming region 19. Further, the wide visual field imaging region IA0 may be inscribed in a circle that defines an outer edge of the intermediate image forming region 19.

Further, the first driving part 24 may be configured to move the first lens barrel 11 in which the first optical system 10 is included in the XY in-plane direction instead of moving the second lens barrel 21 in which the second optical system 20 and the imaging element 36 are included in a direction intersecting the optical axis AX1 of the first optical system 10 (for example, the XY in-plane direction). Even with this configuration, the first driving part 24 can change a positional relation between the first optical system 10, the second optical system 20 and the imaging element 36 in a direction intersecting the optical axis AX2 of the second optical system 20 by moving the first optical system 10.

Further, the first driving part 24 may be configured to move the first lens barrel 11 in which the first optical system 10 is included in a direction intersecting the optical axis AX2 (for example, the XY in-plane direction), in addition to moving the second lens barrel 21 in which the second optical system 20 and the imaging element 36 are included in a direction intersecting the optical axis AX1 (for example, the XY in-plane direction). Even with this configuration, the first driving part 24 can relatively move the first optical system 10, the second optical system 20 and the imaging element 36 in a direction intersecting the optical axis AX1 of the first optical system 10 by moving the first optical system 10, the second optical system 20 and the imaging element 36.

Further, the second optical system 20 and the imaging element 36 may be integrally held by the holding part (the second lens barrel 21). For example, the second optical system 20 may be held by the second lens barrel 21, and the imaging element 36 may be held by a holding mechanism separate from the second lens barrel 21. Then, the first driving part 24 may move the second lens barrel 21 and the separate holding mechanism in the direction intersecting the optical axis AX1 of the first optical system 10 not to change the optical positional relation between the second optical system 20 and the imaging element 36 (a relative positional relation between the second optical system 20 and the imaging element 36). In this case, the second lens barrel 21 and the separate holding mechanism are moved synchronously.

Further, the change of the imaging magnification of the second optical system 20 (i.e., the magnification of the final image 35) may be performed with a method other than the above-mentioned movement of the lenses 26 and 27 in the Z direction. For example, the imaging magnification of the second optical system 20 may be changed by providing a so-called liquid lens in the second optical system 20 and changing a voltage applied to the liquid lens. In this case, the second driving part 33 is a voltage controller configured to control a voltage applied to the liquid lens.

Further, the change of the imaging magnification of the second optical system 20 may be performed by inserting or detaching a predetermined optical system into or from the second optical system 20. In this case, the second driving part 33 is an inserting/removing part configured to insert or detach the predetermined optical system. Further, the optical system disposed on an optical path of light from the first optical system 10 (i.e., at least a part of the second optical system 20) may be configured interchangeably between a first magnification optical system and a second magnification optical system having different imaging magnifications.

In this case, the magnification of the final image 35 is changed depending on whether the optical system disposed on the optical path of the light from the first optical system 10 is the first magnification optical system or the second magnification optical system. Further, in this case, the second driving part 33 serves as an exchange part configured to exchange the optical system disposed on the optical path of the light from the first optical system 10 between the first magnification optical system and the second magnification optical system. In addition, the imaging magnification of the optical system may be changed by reversing at least partial front and rear parts of the optical system (the second optical system 20) disposed on the optical path of the light from the first optical system 10.

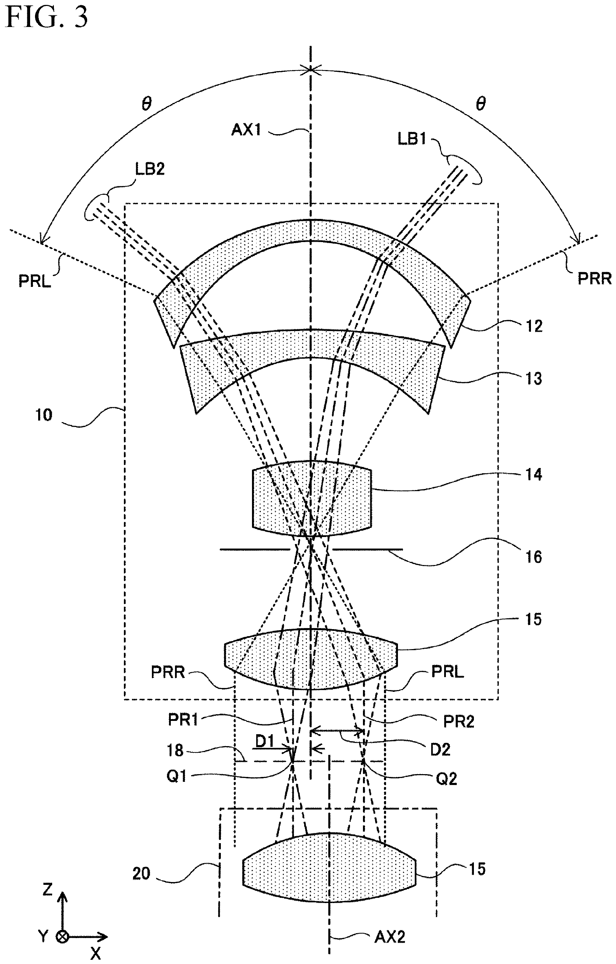

FIG. 3 is a view showing enlarged parts of the first optical system 10 and the second optical system 20. Two light fluxes LB1 and LB2 shown in FIG. 3 are light fluxes that enter the first optical system 10 from different subjects (not shown) to form a part of the intermediate image 18 and enter the second optical system 20.

The light flux LB1 is directed from the first optical system 10 toward a first place Q1 in the intermediate image forming region 19 in which the intermediate image 18 is formed. The light flux LB2 is directed from the first optical system 10 toward a second place Q2 in the intermediate image forming region 19 in which the intermediate image 18 is formed. A distance D1 from the optical axis AX1 of the first optical system 10 to the first place Q1 is different from a distance D2 from the optical axis AX1 of the first optical system 10 to the second place Q2.

A main beam PR1 of the light flux LB1 is a beam passing through a center of the light flux LB1, and a main beam PR2 of the light flux LB2 is a beam passing through a center of the light flux LB2.

As described above, in the imaging device 1 of the first embodiment, at least a part of the intermediate image 18 of the subject formed by the first optical system 10 is re-imaged by the second optical system 20 to form the final image 35 of the subject on the imaging element 36. In general, in such a configuration, when a position of the optical axis AX2 of the second optical system 20 is shifted in the direction intersecting the optical axis AX1 of the first optical system 10, since an incidence angle of the light flux entering the second optical system 20 is changed, imaging performance of the second optical system 20 is degraded.

On the other hand, in the imaging device 1 of the first embodiment, the main beams PR1, PR2, and the like of each of the light fluxes (the light fluxes LB1, LB2, and the like) from the subject imaged by the first optical system 10 enters the intermediate image forming region 19 substantially in parallel with the optical axis AX1. In other words, the first optical system 10 is so-called telecentric on the side of the intermediate image 18. An angle of the main beams (the main beams PR1, PR2, and the like) of the light fluxes (the light fluxes LB 1, LB2, and the like) entering the intermediate image forming region 19 with respect to the optical axis AX1 in a direction of advance may be 1° or less as an example, In this case, a difference between an angle of the main beam PR1 of the light flux LB1 from the first optical system 10 toward the first place Q1 of the intermediate image forming region 19 with respect to the optical axis AX1 and an angle of the main beam PR2 of the light flux LB2 from the first optical system 10 toward the second place Q2 of the intermediate image forming region 19 with respect to the optical axis AX1 is 1° or less.

Further, an angle of the main beams (the main beams PR1, PR2, and the like) of the light fluxes (the light fluxes LB1, LB2, and the like) entering the intermediate image forming region 19 with respect to the optical axis AX1 in the direction of advance may be 0.5° or less or may be 0.3° or less. In this case, a difference between an angle of the main beam PR1 of the light flux LB1 from the first optical system 10 toward the first place Q1 of the intermediate image forming region 19 with respect to the optical axis AX1 and an angle of the main beam PR2 of the light flux LB2 from the first optical system 10 toward the second place Q2 of the intermediate image forming region 19 with respect to the optical axis AX1 may be 0.5° or less or may be 0.3° or less. In addition, an angle of the main beams of all the light fluxes entering the intermediate image forming region 19 with respect to the optical axis AX1 in the direction of advance may be 0.5° or less or may be 0.3° or less. In addition, an angle of the two main beams entering different positions of the light fluxes entering the intermediate image forming region 19 with respect to the optical axis AX1 in the direction of advance may be 0.5° or less or may be 0.3° or less.

Accordingly, the main beams (the main beams PR1, PR2, and the like) of the light fluxes (the light fluxes LB1, LB2, and the like) entering the second optical system 20 via the intermediate image 18 also advance substantially in parallel with the optical axis AX2 of the second optical system 20 and enter the second optical system 20. For this reason, even when the second optical system 20 is moved by the first driving part 24 in the direction (XY in-plane direction) perpendicular to the optical axis AX1 of the first optical system 10, an incidence angle of the light fluxes (the light fluxes LB1, LB2, and the like) entering the second optical system 20 hardly changes. Accordingly, even when the second optical system 20 is moved with respect to the first optical system 10 in the XY in-plane direction, the second optical system 20 maintains good imaging performance, and the final image 35 with high resolution is formed on the imaging element 36.

In order to make the first optical system 10 telecentric on the side of the intermediate image 18, for example, an aperture diaphragm 16 may be provided at a predetermined position. Alternatively, by limiting an effective diameter of a predetermined lens such as a lens 14 or the like to a predetermined size, it may be made telecentric on the side of the intermediate image 18.

Further, even when the second optical system 20 is made telecentric on the side of the intermediate image 18, i.e., on the side of the first optical system 10, a change in incidence angle of the light fluxes (the light fluxes LB1, LB2, and the like) entering the second optical system 20 can be prevented by movement of the second optical system 20 in the XY in-plane direction. For this reason, as an example, an aperture diaphragm (not shown) may be provided in the second optical system 20, and the main beams PR1, PR2, and the like of the light fluxes (the light fluxes LB1, LB2, and the like) passing through the second optical system 20 may be set by the aperture diaphragm to advance substantially in parallel with the optical axis AX2 of the second optical system 20. Instead of the aperture diaphragm, the effective diameter of the lenses such as the lenses 25 to 28 constituting the second optical system 20 may be limited to a predetermined system, and the second optical system 20 may be made telecentric as described above.

The angle of the main beams (the main beams PR1, PR2, and the like) of the light fluxes (the light fluxes LB1, LB2, and the like) entering the second optical system 20 from the intermediate image forming region 19 with respect to the optical axis AX2 in the direction of advance may be 1 ° or less as an example. In this case, a difference between the angle of the main beam PR1 of the light flux LB1 from the first place Q1 of the intermediate image forming region 19 toward the second optical system 20 with respect to the optical axis AX2 and the angle of the main beam PR2 of the light flux LB2 from the second place Q2 of the intermediate image forming region 19 toward the second optical system 20 with respect to the optical axis AX2 is 1 ° or less.

Further, the angle of the main beams (the main beams PR1, PR2, and the like) of the light fluxes (the light fluxes LB1, LB2, and the like) entering the second optical system 20 from the intermediate image forming region 19 with respect to the optical axis AX2 in the direction of advance may be 0.5° or les or may be 0.3° or less. In this case, a difference between the angle of the main beam PR1 of the light flux LB1 from the first place Q1 of the intermediate image forming region 19 toward the second optical system 20 with respect to the optical axis AX2 and the angle of the main beam PR2 of the light flux LB2 from the second place Q2 of the intermediate image forming region 19 toward the second optical system 20 with respect to the optical axis AX2 may be 0.5° or less or may be 0.3° or less.

In addition, the angle of the main beams of all the light fluxes entering the second optical system 20 from the intermediate image forming region 19 with respect to the optical axis AX2 in the direction of advance may be 0.5° or less or 0.3° or less. In addition, the angle of the two main beams having different positions in the light fluxes entering the second optical system 20 from the intermediate image forming region with respect to the optical axis AX1 in the direction of advance may be 0.5° or less or may be 0.3° or less.

Further, both the first optical system 10 and the second optical system 20 may be made telecentric on the side of the intermediate image 18. In this case, a difference between the angle of the direction of advance of the main beams (the main beams PR1, PR2, and the like) of the light fluxes (the light fluxes LB1, LB2, and the like) entering the intermediate image forming region 19 from the first optical system 10 with respect to the optical axis AX1 and the angle of the direction of advance of the main beams (the main beams PR1, PR2, and the like) of the light fluxes (the light fluxes LB1, LB2, and the like) entering the second optical system 20 from the intermediate image forming region 19 with respect to the optical axis AX2may be 1° or less as an example.

Further, the optical axis AX1 of the first optical system 10 and the optical axis AX2 of the second optical system 20 in the intermediate image forming region 19 may be substantially parallel to each other. Further, it is not limited to the intermediate image forming region 19 and the optical axis AX1 in the entire first optical system 10 and the optical axis AX2 in the entire second optical system 20 may be substantially parallel to each other.

Further, a difference between the angle of the main beams (the main beams PR1, PR2, and the like) of the light fluxes (the light fluxes LB1, LB2, and the like) entering the intermediate image forming region 19 from the first optical system 10 with respect to the optical axis AX1 in the direction of advance and the angle of the main beams (the main beams PR1, PR2, and the like) of the light fluxes (the light fluxes LB1, LB2, and the like) entering the second optical system 20 from the intermediate image forming region 19 with respect to the optical axis AX2 in the direction of advance may be 0.5° or less or may be 0.3° or less. These conditions may be established for all light fluxes passing through the intermediate image forming region 19, or may be established for one light flux in the light fluxes passing through the intermediate image forming region 19.

Further, both the first optical system 10 and the second optical system 20 need not be telecentric on the side of the intermediate image 18. When either the first optical system 10 or the second optical system 20 is telecentric on the side of the intermediate image 18, the other may be an optical system (or a bright optical system) that allows the light fluxes (the light fluxes LB1, LB2, and the like) passing through one optical system and the imaging region IA1 to pass therethrough without blocking, i.e., having a large numerical aperture.

Further, both a main beam PRL and a main beam PRR shown by dotted lines in FIG. 3 indicate the main beams of the light fluxes imaged on an outer edge of the intermediate image 18. Here, the outer edge of the intermediate image 18 corresponds to an outer circumference of the intermediate image forming region 19 of the intermediate image 18 shown in FIG. 2. The first optical system 10 has a half viewing angle of an angle θ and a viewing angle of an angle 2θ, with the +Z direction, which is a direction parallel to the optical axis AX1, as the center.

The viewing angle of the first optical system 10 may be 170° or more as an example.

Further, since the viewing angle of the subject imaged by the imaging device 1 is smaller than the viewing angle of the first optical system 10, the viewing angle of the first optical system 10 may also be referred to as the maximum viewing angle.

Hereinafter, the controller 50 of the imaging device 1 will be described with reference to FIG. 1 again.

The controller 50 controls various types of operations of the imaging device 1. The controller 50 includes an imaging controller 51, an image generating part 52, an analyzing part 53, a visual field controller 54, a storage 55, and an interface part 56. The imaging controller 51, the image generating part 52, the analyzing part 53, the visual field controller 54, the storage 55, and the interface part 56 perform communication of signals therebetween via a wiring 58 such as a bus or the like.

The imaging controller 51 sends a control signal S2 to the imaging element 36 and controls the imaging element 36. Specifically, the imaging controller 51 performs control of start and end of an output of a low resolution moving image (through image) with respect to the imaging element 36, start and end of an output of a high resolution moving image, photographing of a still image, setting of a light reception time (exposure time) of the final image 35, setting of a gain of photoelectric conversion, and the like.

The image generating part 52 receives an imaging signal S1 from the imaging element 36 and generates image data of the final image 35 imaged by the imaging element 36. The image generating part 52 may have a function of correcting distortion of the final image 35 due to distortion of at least one of the first optical system 10 and the second optical system 20 upon generation of the image data. Further, the image generating part may have a function of correcting degradation of the final image 35 due to aberration other than distortion of at least one optical system of the first optical system 10 and the second optical system 20.

The analyzing part 53 analyzes information of the subject included in the image data of the final image 35 generated by the image generating part 52. Details of the information of the subject analyzed by the analyzing part 53 will be described below.

The visual field controller 54 sends a driving signal S3 to the first driving part 24, drives a drive member such as a linear motor or the like included in the first driving part 24 (moves the mover 22 with respect to the stator 23), and moves the second optical system 20 and the imaging element 36 in a direction (for example, XY in-plane direction) intersecting the optical axis AX1 of the first optical system.

The visual field controller 54 sends a driving signal S4 to a second driving part 24, drives a drive member such as a linear motor or the like included in the drive mechanisms 31 and 32 of the second driving part 24, moves the lenses 26 and 27 in the Z direction, and changes magnification of the second optical system 20, i.e., magnification of the final image 35.

The visual field controller 54 drives at least one of the first driving part 24 and the second driving part 24 and changes at least one of a center position and a size (range) of the imaging region IA1 (a visual field of the imaging device 1) based on the information of the subject analyzed by the analyzing part 53. Further, the visual field controller 54 can also change at least one of the center position of the visual field of the imaging device 1 and the size of the visual field of the imaging device 1 by driving at least one of the first driving part 24 and the second driving part 24.

Further, the visual field controller 54 may also send the driving signal S3 to the first driving part 24 and move the second optical system 20 and the imaging element 36 based on the signal related to the change of the center position of the visual field input from the operation unit (not shown) via the interface part 56 regardless of the information of the subject analyzed by the analyzing part 53.

Further, the visual field controller 54 may also send the driving signal S4 to the second driving part 33 and move the lenses 26 and 27 based on the signal related to the change in the size of the visual field input from the operation unit (not shown) via the interface part 56.

Further, the visual field controller 54 may send the driving signal S3 to the first driving part 24 and simultaneously send the driving signal S4 to the second driving part 33 based on the signal related to the change of the center position of the visual field and the signal related to the change in the size of the visual field input from the operation unit (not shown) via the interface part 56.

Further, the operator may input at least one of the signal related to the change of the center position of the visual field and the signal related to the change in the size of the visual field to the visual field controller 54 via the interface part 56 by operating the operation unit (not shown).

The storage 55 includes a storage member such as a memory device, a magnetic disk, or the like, and stores the image data of the subject imaged by the imaging element 36 and generated by the image generating part 52 according to necessity.

The interface part 56 outputs the image data of the subject imaged by the imaging element 36 and generated by the image generating part 52 of the image data stored in the storage 55 to external equipment via a network line NW. In addition, the interface part 56 may receive an order with respect to the imaging device 1 from the external equipment. The interface part 56 may include a wireless transmission and a reception mechanism, and may perform output of image data and input of an order in a wireless manner.

Further, the imaging controller 51, the image generating part 52, the analyzing part 53, the visual field controller 54, the storage 55, and the interface part 56 may be hardware, which is independent from each other, i.e., mechanically separated from each other. Alternatively, some of the imaging controller 51, the image generating part 52, the analyzing part 53, the visual field controller 54, the storage 55, and the interface part 56 may be integrally configured as one or a plurality of hardware.

In addition, at least one of the imaging controller 51, the image generating part 52, the analyzing part 53, the visual field controller 54, the storage 55, and the interface part 56 may be configured by hardware and software that controls the hardware.

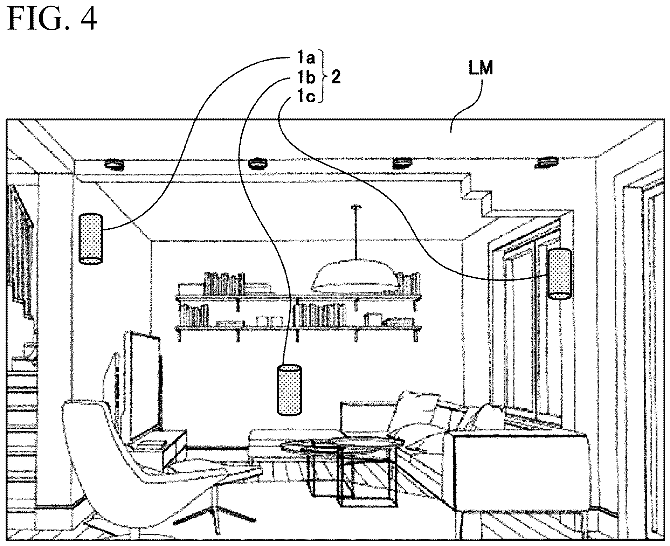

FIG. 4 is a view showing an example of a usage state of the imaging device 1 of the first embodiment. In the example shown in FIG. 4, for example, a plurality of imaging devices 1a to 1c of the first embodiment are installed on a wall surface or the like of a domestic living room LM where one or more users live. The plurality of imaging devices 1a to 1c of the first embodiment constitute an imaging system 2, which will be described below. The number of the imaging devices 1 that constitute the imaging system 2 is not limited to three shown in FIG. 4 but may be an arbitrary number of two or more.

Further, when using the imaging device 1, it is not necessary to use the plurality of imaging devices 1a to 1c together, and only one of the imaging devices 1a to 1c may be used.

In the example, the imaging device 1 (1a to 1c) images the subject in the living room LM almost all the time, and for example, records the daily life of the family by capturing a suitable shutter chance.

In an initial state or a normal state, the imaging device 1, for example, sets the imaging magnification of the second optical system 20 to a low magnification, i.e., the size of the imaging region IA1 (the width WX, the width WY) with respect to the intermediate image forming region 19 shown in FIG. 2 to a large value to image a wide range of subjects. As described above, the position and the size of the imaging region IA1 with respect to the intermediate image forming region 19 are set as the visual field controller 54 drives the first driving part 24 and the second driving part 22.

The image generating part 52 receives the imaging signal S1 from the imaging element 36, and generates image data (wide area image data) of the final image 35. Further, in the initial state or the normal state, the imaging device 1 may set the imaging magnification of the second optical system 20 to the minimum magnification, in other words, widen the visual field of the imaging device 1 to the maximum, and image the wide visual field imaging region IA0 shown in FIG. 2.

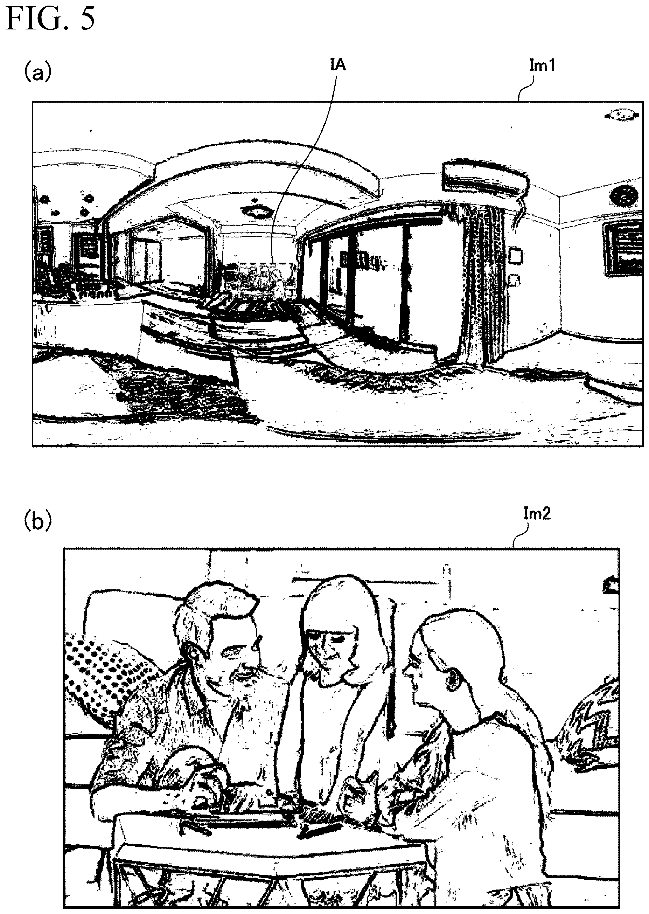

FIG. 5(a) is a view showing a wide area image Im1 based on the wide area image data of the living room LM as an example of the image imaged by the imaging device 1, and as described below, a wide range of subject in the living room LM is captured. The analyzing part 53 analyzes the information of the subject included in the wide area image Im1, which is an image of the final image 35 generated by the image generating part 52.

For example, the analyzing part 53 detects, in particular, presence or absence of an interest area IA to be imaged or recorded in the wide area image Im1 by analyzing the wide area image data including the information of the subject generated by the image generating part 52. The interest area IA is, for example, a region that includes a person, a part of a person such as a person's face, an animal, a part of an animal such as an animal's face, or the like in image data.

Further, the interest area IA is not limited to at least a part of a person or animal, and may be any region that includes an object (for example, a subject to be imaged or recorded) that is a target of interest. For example, the interest area IA may refer to objects worn or carried by a person (clothes, shoes, bags, canes, or the like), dangerous items such as guns and explosives, moving bodies such as vehicles, ships, aircraft (drone, etc.), and a region that includes at least a part of a building or the like. For example, the interest area IA may be a region including at least the inside of a working chamber of a machine tool (a space in which a workpiece is machined by the working tool) and the inside of a working tool exchange device in which a working tool attached to a main shaft of the working chamber is exchanged with another type of working tool.

For example, as the inside of the working chamber of the machine tool, a region including at least a part of a working tool attached to the main shaft of the working chamber, a workpiece placed on a stage of the working chamber, a working point of the workpiece by the working tool, a cutting chip generated in machining of the workpiece by the working tool, a cutting fluid applied to a working portion by the working tool, and the like, may be set as the interest area IA. For example, as the inside of the exchange device configured to exchange the working tool attached to the main shaft of the working chamber with another type of working tool, a region including at least a part of the working tool accommodated may be set as the interest area IA.

For example, the analyzing part 53 may analyze wide area image data including information of the subject generated by the image generating part 52 and detect the interest area IA from the wide area image Im 1 by executing object detection processing through machine learning. As an example, the analyzing part 53 may detect the interest area IA by executing object detection processing through deep learning.

More specifically, the analyzing part 53 may detect the interest area IA from the wide area image Im1 using an object detection algorithm that uses a convolutional neural network (CNN). Further, the analyzing part 53 may detect the interest area IA from the wide area image Im1 by another object detection processing through deep learning.

For example, the analyzing part 53 may use an object detection algorithm that uses a region with CNN features (R-CNN), a faster region with CNN features (Faster R-CNN), a mask region with CNN features (Mask R-CNN), or the like, as a region proposal base. In addition, the analyzing part 53 is not limited to the region proposal base, but may use an object detection algorithm by another deep learning such as you only look once (YOLO), a single shot multibox detector (SSD), or the like.

Further, the analyzing part 53 is not limited to deep learning but may detect the interest area IA using an algorithm such as linear regression, a decision tree, a support vector machine (SVM), or the like. Further, the analyzing part 53 is not limited to machine learning but may detect the interest area IA through conventional template matching processing.

For example, since the wide area image Im1 shown in FIG. 5(a) contains images of multiple persons, the analyzing part 53 detects a region containing multiple persons shown by the broken lines as the interest area IA. Further, the interest area IA detected is not limited to one but the analyzing part 53 may detect a plurality of interest areas IA from an image.

The analyzing part 53 calculates a position and a size of the interest area IA in the wide area image Im 1 when the interest area IA is detected. Then, the analyzing part 53 transmits the position and the size of the interest area IA in the wide area image Im1 to the visual field controller 54.

The visual field controller 54 receives a signal from the analyzing part 53, sends the driving signal S3 to the first driving part 24, moves the second optical system 20 and the imaging element 36 in the direction intersecting the optical axis AX1 (for example, the XY in-plane direction), and causes the center position CT (see FIG. 2) of the imaging region IA1 to substantially coincide with the center position of the interest area IA. The visual field controller 54 sends the driving signal S4 to the second driving part 24, changes the magnification of the second optical system 20, i.e., the magnification of the final image 35, and causes the size of the imaging region IA1 to substantially coincide with the size of the interest area IA.

Accordingly, an image corresponding to the interest area IA is formed on the imaging element 36, and the imaging device 1 images an enlarged image Im2 corresponding to an enlarged image of a portion of the interest area IA in the wide area image Im1 and shown in FIG. 5(b).

In the imaging device 1, the change of the center position CT (see FIG. 2) of the imaging region IA1 can be performed by only movement of the second optical system 20 in the XY in-plane direction without rotating the entire imaging device 1 or both the first optical system 10 and the second optical system 20. Accordingly, in the imaging device 1, the change of the center position CT of the imaging region IA1, i.e., the change of the visual field of the imaging device 1 can be performed at a high speed.

The analyzing part 53 may also perform analysis of the subject of the enlarged image Im2, i.e., the interest area IA, and for example, may detect whether the person, etc. who is the subject (that is, the person, etc. included in the interest area) shows a specified expression such as a smile, or whether the person performs a specified gesture or waving hand.

For example, the analyzing part 53 may detect a specified expression such as smile or the like or a specified gesture or waving hand of a person, etc. (a person etc. contained in the interest area) by executing the above-mentioned object detection processing or conventional tracking processing (to be described below). Further, the analyzing part 53 is not limited to the above-mentioned object detection processing or the conventional tracking processing but may detect a specified expression such as smile or the like or a specified gesture or waving hand of a person etc (a person etc. contained in the interest area) through another image processing.

Further, it is not limited to the enlarged image Im2, and the analyzing part 53 may detect whether a person etc. contained in the interest area shows a specified expression such as smile or the like or whether a specified gesture or waving hand is performed when wide area image data generated by the image generating part 52 in an initial state or a normal state is analyzed, and perform at least one or more operations of the following A to G operations.

Then, when the above-mentioned expression, gesture or waving hand of the subject is detected, the analyzing part 53 may also perform one or more operations in the next A to G operations.

A: An order of causing the imaging element 36 to perform imaging a still image is issued to the imaging controller 51.
B: An order of causing the imaging element 36 to start or end output of low resolution moving image data is issued to the imaging controller 51.
C: An order of causing the imaging element 36 to start or end output of high resolution moving image data is issued to the imaging controller 51.
D: An order of starting or terminating storage of image data of a subject imaged by the imaging element 36 and generated by the image generating part 52 is issued to the storage 55.
E: An order of starting or terminating postscript of a predetermined identification signal (flag) in image data during storage is emitted to the storage 55.
F: An order of starting or terminating transmission of image data of a subject imaged by the imaging element 36 and generated by the image generating part 52 to external equipment is issued to the interface part 56.
G: An order of setting the imaging region IA1 as a wide visual field, i.e., decreasing an imaging magnification of the second optical system 20, or an order of setting the imaging region IA1 as a narrow visual field, i.e., increasing an imaging magnification of the second optical system 20 is issued to the visual field controller 54.

Further, when the analyzing part 53 detects the above-mentioned expression, gesture or waving hand of the subject (for example, a person etc. in the interest area) and any one of the above-mentioned A to G operations is started, the analyzing part 53 may terminate these operations after a predetermined time has passed.

In addition, the analyzing part 53 may start any operation of the above-mentioned A to G when the interest area IA is detected from the wide area image Im 1 or when the visual field controller 54 causes the size of the imaging region IA1 to substantially coincide with the size of the interest area IA after that regardless of the above-mentioned expression, gesture or waving hand of the subject (for example, a person etc. contained in the interest area).

The analyzing part 53 may detect presence or absence of the movement of the interest area IA in the enlarged image Im2 (movement of the subject to be imaged or recorded (person, animal, or the like) included in the interest area IA). Then, when the interest area IA is moved, an order of moving the imaging region IA1 (a visual field of the imaging device 1) following the movement of the interest area IA may be issued to the visual field controller 54.

The visual field controller 54 receives the order, sends the driving signal S3 to the first driving part 24, and moves the positions of the second optical system and the imaging element 36. Accordingly, the imaging device 1 can continuously image the interest area IA without losing the interest area IA from the imaging region IA1 of the imaging device 1 even when the subject to be imaged or recorded contained in the interest area IA is moved to the imaging device 1.

Further, the analyzing part 53 may issue an order of moving the imaging region IA1 (a visual field of the imaging device 1) to the visual field controller 54 and an order of changing the size of the imaging region IA1 (a visual field of the imaging device 1). Then, the visual field controller 54 may send the driving signal S4 to a second control unit 33 while sending the driving signal S3 to a first control unit 24, and move the positions of the lenses 26 and 27 while moving the positions of the second optical system 20 and the imaging element 36.

In this case, at least a part of the duration in which the positions of the second optical system 20 and the imaging element 36 are moved overlaps at least a part of the duration in which the positions of the lenses 26 and 27 are moved. Further, the entire duration in which the positions of the second optical system 20 and the imaging element 36 are moved may not completely overlap the entire duration in which the positions of the lenses 26 and 27 are moved. In other words, at least a part of the duration in which the imaging region IA1 (the visual field of the imaging device 1) is moved may overlap at least a part of the duration in which the size of the imaging region IA1 (the visual field of the imaging device 1) is changed.

For example, the analyzing part 53 may detect movement of the interest area IA between the plurality of enlarged images Im2 imaged by the imaging element 36 at different times by executing conventional tracking processing. As an example, the analyzing part 53 may set the image data of the interest area IA detected from the wide area image Im1 through the above-mentioned object detection processing as a template, detect the interest area IA from the enlarged image Im2 imaged at different times through the conventional template matching processing, and calculate a movement amount and a moving direction (i.e., temporal displacement) of the interest area IA on the enlarged image Im2.

Then, the analyzing part 53 calculates a movement amount and a moving direction of the imaging region IA1 based on the calculated movement amount and moving direction of the interest area IA, and issues an order of moving the imaging region IA1 to the visual field controller 54. The visual field controller 54 receives the order, sends the driving signal S3 according to the movement amount and the moving direction of the imaging region IA1 to the first driving part 24, and moves the positions of the second optical system 20 and the imaging element 36.

Further, the analyzing part 53 does not need to use the image data of the interest area IA detected from the wide area image Im1 as a template. For example, the analyzing part 53 may use the image data of the interest area IA detected from the enlarged image Im2 imaged at a first time point through the above-mentioned object detection processing as a template, detect interest area IA from the enlarged image Im2 imaged at a second time point after a predetermined time has lapsed, and calculate a movement amount and a moving direction of the interest area IA between the first time point and the second time point.

Further, the analyzing part 53 is not limited to the template matching processing but may calculate a movement amount and a moving direction of the interest area IA through another conventional tracking processing. Further, the analyzing part 53 is not limited to the conventional tracking processing but may calculate a movement amount and a moving direction of the interest area IA through another conventional image processing.

Further, the analyzing part 53 may predict a movement amount and a moving direction of the interest area IA per a next predetermined time based on the movement amount and the moving direction of the interest area IA between different times calculated by the above-mentioned tracking processing using conventional deep learning. In this case, the analyzing part 53 calculates (predicts) a movement amount and a moving direction of the imaging region IA1 per predetermined time and issues an order of moving the imaging region IA1 with respect to the visual field controller 54 based on the movement amount and the moving direction of the interest area IA per the predicted predetermined time.

Further, not limited to the enlarged image Im2, the analyzing part 53 may detect presence or absence of movement of the interest area IA of the image data of any one imaged by the imaging element 36 and may issue an order of moving the imaging region IA1 (the visual field of the imaging device 1) following the movement of the interest area IA with respect to the visual field controller 54. For example, the analyzing part 53 may detect presence or absence of movement of the interest area IA of the wide area image Im1.

For example, when the subject to be imaged or recorded contained in the interest area IA is moved with respect to the imaging device 1 in the initial state or the normal state, the analyzing part 53 may detect movement of the interest area IA in the wide area image Im1 detected by analyzing the wide area image data generated by the image generating part 52 and issue an order of moving the imaging region IA1 following movement of the interest area IA with respect to the visual field controller 54.

Even in this case, the analyzing part 53 may calculate a movement amount and a moving direction (displacement) of the interest area IA through the above-mentioned tracking processing. In addition, the analyzing part 53 may predict a movement amount and a moving direction of the interest area IA per predetermined time based on the movement amount and the moving direction of the interest area IA in different times calculated by the above-mentioned tracking processing using conventional deep learning.

Further, it is not limited to that only the subject to be imaged or recorded contained in the interest area IA is moved, as long as the imaging device 1 and the subject are relatively moved, the analyzing part 53 can detect movement of the interest area IA on the image and continuously image the interest area IA without losing the interest area IA from the imaging region IA1 of the imaging device 1 by issuing the order of moving the imaging region IA1 so as to follow movement of the interest area IA with respect to the visual field controller 54.

Further, even if the above-mentioned object detection processing is executed, when the interest area IA cannot be recognized in an enlarged image Im1, the analyzing part 53 may issue an order of detecting the subject to be imaged or recorded again to the visual field controller 54 and decrease the imaging magnification of the second optical system 20 while assuming that the subject to be imaged or recorded contained in the interest area IA is lost from the imaging region IA1. Since the visual field of the imaging device 1 is widened by decreasing the imaging magnification of the second optical system 20, a search range of the subject to be imaged or recorded can be widened.

When a distance between the subject to be imaged or recorded and the imaging device 1 is changed, the analyzing part 53 may detect presence or absence of a change in the size of the interest area IA in the enlarged image Im2 (the size of the image of the subject to be imaged or recorded (person, animal, or the like) contained in the interest area IA). Then, when the size of the interest area IA is changed, an order of changing the size of the imaging region IA1 following the change in the size of the interest area IA may be issued to the visual field controller 54. The visual field controller 54 receives such order, sends the driving signal S3 to the second driving part 33, and changes the imaging magnification of the second optical system.

For example, when it is detected that the size of the interest area IA is changed, the analyzing part 53 may issue an order of changing the imaging region IA1 to offset the change in the size of the interest area IA to the visual field controller 54. For example, when it is detected that the interest area IA is increased, the analyzing part 53 may issue an order of increasing the imaging region IA1 with respect to the visual field controller 54. The visual field controller 54 receives such order and decreases the imaging magnification of the second optical system.

Meanwhile, when it is detected that the interest area IA is reduced, the analyzing part 53 may issue an order of reducing the imaging region IA1 with respect to the visual field controller 54. The visual field controller 54 receives such order and increases the imaging magnification of the second optical system. Accordingly, even if the distance between the subject to be imaged or recorded contained in the interest area IA and the imaging device 1 is changed, the imaging device 1 can continuously image the interest area IA with a substantially fixed size with respect to the imaging region IA1 (the visual field of the imaging device 1).

Further, the analyzing part 53 may issue an order of changing the imaging magnification (the size of the imaging region IA1) and an order of changing the position of the imaging region IA1 to the visual field controller 54. Then, the visual field controller 54 may send the driving signal S3 to the first control unit 24 while sending the driving signal S4 to the second control unit 33, and move the positions of the second optical system 20 and the imaging element 36 while moving the positions of the lenses 26 and 27.

For example, the analyzing part 53 may detect a change in the size on the image of the interest area IA between the plurality of enlarged images Im2 imaged by the imaging element 36 at different times by executing the above-mentioned object detection processing. For example, the analyzing part 53 may detect the interest area IA from each of the enlarged images Im2 imaged at a first time point and a second time point after predetermined time has passed from the first time point by the above-mentioned object detection processing, and calculate a change amount of the size of the interest area IA at the second time point with respect to the size of the interest area IA at the first time point.

Then, the analyzing part 53 may calculate a change amount of the size of the imaging region IA1 based on the calculated change amount of the size of the interest area IA, and issue an order of changing the size of the imaging region IA1 with respect to the visual field controller 54. The visual field controller 54 receives such order, sends the driving signal S3 according to the change amount of the size of the imaging region IA1 to the second driving part 33, and changes the imaging magnification of the second optical system 20.

Further, the analyzing part 53 is not limited to the above-mentioned object detection processing but may detect a change in the size on the image of the interest area IA between the plurality of enlarged images Im2 imaged by the imaging element 36 at different times by executing another conventional image processing.

Further, the analyzing part 53 may predict a change amount of the size of the interest area IA per a next predetermined time based on the change amount of the size of the interest area IA between different times calculated by the above-mentioned object detection device using conventional deep learning. In this case, the analyzing part 53 calculates (predicts) of a change amount of the size of the imaging region IA1 per predetermined time and issues an order of changing the size of the imaging region IA1 to the visual field controller 54 based on the change amount of the size of the interest area IA per predicted predetermined time.

Further, not limited to the enlarged image lm2, the analyzing part 53 may detect presence or absence of the change of the size of the interest area IA of any image imaged by the imaging element 36 and issue an order of moving the size of the imaging region IA1 (the visual field of the imaging device 1) so as to follow the change of the size of the interest area IA to the visual field controller 54. For example, the analyzing part 53 may detect presence or absence of the change of the size of the interest area IA of the wide area image Im1.

For example, in the initial state or the normal state, when the distance between the subject to be imaged or recorded contained in the interest area IA and the imaging device 1 is changed, it is preferable to detect a change in the detected size of the interest area IA in the wide area image Im1 by analyzing the wide area image data generated by the image generating part 52 and issue an order of changing the size of the imaging region IA1 following the change in the size of the interest area IA to the visual field controller 54.

Further, in the example shown in FIG. 4, while the imaging device 1 (1a to 1c) is provided in the living room LM, there is not limitation thereto. For example, any kind of object (subject to be imaged or recorded) in which one or a plurality imaging devices 1 are installed at predetermined places in a building may be imaged and recorded. As an example, it may be installed at a predetermined place in a nursery school, a school, a medical facility, nursing home, a conference room, a store, a station, or the like to image and record any kind of object such as a person etc. Further, one or a plurality of imaging devices 1 may be installed at a predetermined place in a moving body to image or record any kind of object (subject to be imaged or recorded).

As an example, it may be installed at a predetermined place in a vehicle, a ship, an aircraft, or the like to image and record any kind of object. Further, for example, the one or plurality of imaging devices 1 may be installed at a predetermined outdoor place to image and record any kind of object (subject to be imaged or recorded) such as a person, an animal, or the like. As an example, the one or plurality of imaging devices 1 may be installed at a predetermined place of a building such as a vending machine, a street light, a telephone pole, a bridge, a shop, a doorway of a station, and the like to image and record any kind of object.

Further, the one or plurality of imaging devices 1 may be installed at a predetermined place of a moving body such as a vehicle, a ship, an aircraft (a drone or the like), or the like to image and record any kind of object (subject to be imaged or recorded) such as a person, an animal, or the like from the moving body.

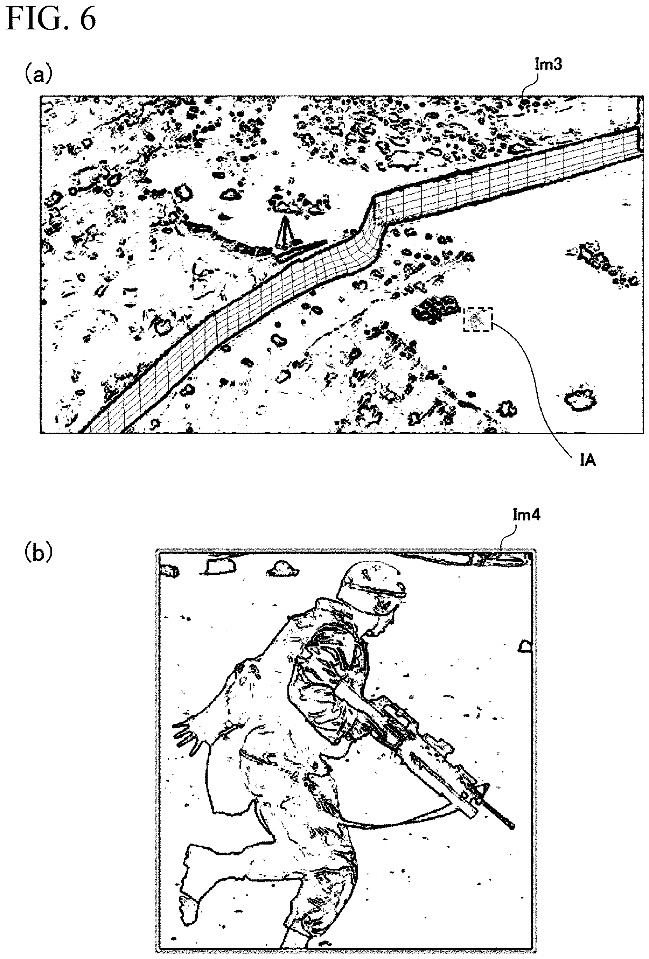

FIG. 6 is a view showing an example of an image based on image data generated by imaging of the imaging device 1 in another example of a usage state of the imaging device 1 of the first embodiment. In this example, the imaging device 1 is installed outdoors as an example and used as a monitoring camera configured to monitor surroundings of the imaging device 1. Further, when used as camera monitoring, the one or plurality of imaging devices 1 may be installed indoors. Further, the one or plurality of imaging devices 1, as monitoring cameras, may be installed at predetermined places where monitoring is required, such as shops, train stations, airports, medical facilities, nursing homes, prisons, military installations, borders, roads, parks, and the like, and image and record any kind of object (subject to be imaged or recorded). Further, the one or plurality of imaging devices 1 may be installed at moving bodies such as vehicles, ships, aircrafts (drones or the like), or the like, and may image and record any kind of object in which monitoring is required from the moving body.

FIG. 6(a) is a view showing a wide area image Im3 based on the wide area image data obtained by imaging scenery around the imaging device 1 installed outdoors as an example of the image imaged by the imaging device 1. The analyzing part 53 analyzes information of the subject contained in the wide area image Im3, and in particularly, detects presence or absence of the interest area IA to be imaged or recorded. Further, the analyzing part 53 may detect the interest area IA by executing the above-mentioned object detection processing like the above-mentioned usage state of the imaging device 1 shown in FIGS. 4 and 5.

An image of a person is contained in the wide area image Im3 shown in FIG. 6(a), and as an example, the analyzing part 53 detects a region contained in the image of the person shown by a broken line as the interest area IA. The analyzing part 53 calculates a position and a size of the wide area image Im3 of the interest area IA and transmits them to the visual field controller 54.

The visual field controller 54 receives a signal from the analyzing part 53, sends the driving signal S3 to the first driving part 24, moves the second optical system 20 and the imaging element 36 in the XY in-plane direction, and causes the center position CT (see FIG. 2) of the imaging region IA1 to substantially coincide with the center position of the interest area IA. Accordingly, an image of the subject corresponding to an interest area A2 is formed on the imaging element 36, and the imaging device 1 images an enlarged image Im4 shown in FIG. 6(b) corresponding to the enlarged image of the portion of the interest area A2 in the wide area image lm3.

The analyzing part 53 may detect presence or absence of the movement of the interest area IA in the enlarged image Im4. When the subject to be imaged or recorded (a person, an animal, or the like) contained in the interest area IA and the imaging device 1 are relatively moved (for example, when the subject to be imaged or recorded contained in the interest area IA is moved), an order of moving the imaging region IA1 so as to follow the movement of the interest area IA may be issued to the visual field controller 54.

The visual field controller 54 receives such order, sends the driving signal S3 to the first driving part 24, and moves the positions of the second optical system 20 and the imaging element 36. Accordingly, even when the subject to be imaged or recorded contained in the interest area IA is moved with respect to the imaging device 1, the imaging device 1 can continuously image the interest area IA without losing the interest area IA from the imaging region IA1 of the imaging device 1.

Further, the analyzing part 53 may detect movement of the interest area IA between the plurality of enlarged images Im2 imaged by the imaging element 36 at different times by executing the above-mentioned tracking processing, like the above-mentioned usage state of the imaging device 1 shown in FIGS. 4 and 5. Further, the analyzing part 53 is not limited to conventional tracking processing but may detect movement of the interest area IA through another conventional image processing. Further, the analyzing part 53 may issue an order of changing the size of the imaging region IA1 together with an order of moving the imaging region IA1 to the visual field controller 54.

Further, the analyzing part 53 may predict a movement amount and a moving direction of the interest area IA per a next predetermined time based on the movement amount and the moving direction of the interest area IA between different times calculated by the above-mentioned tracking processing using conventional deep learning, like the above-mentioned usage state of the imaging device 1 shown in FIGS. 4 and 5. In this case, the analyzing part 53 calculates (predicts) a movement amount and a moving direction of the imaging region IA1 per predetermined time based on the movement amount and the moving direction of the interest area IA per the predicted predetermined time, and issues an order of moving the imaging region IA1 to the visual field controller 54.

In addition, the analyzing part 53 may analyze the size of the interest area IA in the enlarged image Im4 according to relative movement between the subject to be imaged or recorded contained in the interest area IA and the imaging device 1 (for example, movement of the subject). Then, when a proportion of the interest area IA in the enlarged image Im4 becomes higher than a predetermined proportion, an order may be issued to the visual field controller 54 to reduce the imaging magnification of the second optical system 20.

Meanwhile, when the proportion of the interest area IA in the enlarged image Im4 becomes lower than the predetermined proportion, an order may be issued to the visual field controller 54 to increase the imaging magnification of the second optical system 20. Further, when the proportion of the interest area IA in the enlarged image Im4 is higher than the predetermined proportion, for example, at least a partial region of the interest area IA is lost from the enlarged image Im4 due to reduction of the distance between the subject to be imaged or recorded contained in the interest area IA and the imaging device 1.

Further, a case when the proportion of the interest area IA in the enlarged image Im4 becomes lower than the predetermined proportion is, for example, a case in which the interest area IA cannot be recognized on the enlarged image Im4 due to the increase of the distance between the subject to be imaged or recorded contained in the interest area IA and the imaging device 1.

Further, the analyzing part 53 may calculate a size of the interest area IA in the image by the above-mentioned object detection processing. Further, the analyzing part 53 may issue an order of changing the position of the imaging region IA1 together with an order of changing the imaging magnification to the visual field controller 54.

The analyzing part 53 may calculate a size of the interest area IA in the enlarged image Im4, issue an order to the visual field controller 54 to set the proportion of the interest area IA in the enlarged image Im4 to a fixed value, and change the imaging magnification of the second optical system 20. Further, the analyzing part 53 may calculate a size of the interest area IA in the image by the above-mentioned object detection processing.

In addition, even if the above-mentioned object detection processing is executed, in particular, when the interest area IA cannot be recognized in the enlarged image Im4, the analyzing part 53 may issue an order to the visual field controller 54 in order to detect the subject to be imaged or recorded again and lower the imaging magnification of the second optical system 20 while assuming that the subject to be imaged or recorded contained in the interest area IA is lost from the imaging region IA1 in which the enlarged image Im4 is imaged. Since the visual field of the imaging device 1 is increased by lowering the imaging magnification of the second optical system 20, the search range of the subject to be imaged or recorded can be widened.

Further, when the interest area IA cannot be recognized in the enlarged image Im4, the analyzing part 53 may issue an order to the visual field controller 54 in order to detect the subject to be imaged or recorded again and increase the imaging magnification of the second optical system 20 while assuming that the subject to be imaged or recorded contained in the interest area IA is reduced with respect to the imaging region IA1 in which the enlarged image Im4 is imaged.

Even when the subject to be imaged or recorded is present far from the imaging device 1 by increasing the imaging magnification of the second optical system 20, the interest area IA containing the subject to be imaged or recorded can be detected on the image data again. Further, the analyzing part 53 may issue an order of changing the position of the imaging region IA 1 together with the order of changing the imaging magnification to the visual field controller 54.

Further, even if the above-mentioned object detection processing is executed, when the interest area IA cannot be recognized in the enlarged image Im4, the analyzing part 53 may issue an order to the visual field controller 54 in order to detect the subject to be imaged or recorded contained in the interest area IA again, and change the position of the imaging region IA1 (may drive the first driving part 24). In this case, the analyzing part 53 may issue an order to the visual field controller 54 in order to change the position of the imaging region IA1 while changing the imaging magnification of the second optical system 20.

Even in the example shown in FIG. 6, the imaging device 1 may perform the above-mentioned A to G operations like the case of the example shown in FIG. 5. In addition, the analyzing part 53 analyzes whether a person in the interest area A2 possesses dangerous items such as a gun, a bomb, and the like, and may start any one operation of the above-mentioned C, D, E, F and G when possesses the predetermined dangerous item.

### (Effects of imaging device of first embodiment)

(1) The imaging device 1 of the first embodiment includes the first optical system 10 configured to form the intermediate image 18 of the subject, the second optical system 20, which is the optical system configured to form the final image 35 by re-imaging at least a part of the intermediate image 18, configured to change a magnification of the final image 35, the imaging element 36 configured to image the final image 35, and the first driving part 24 configured to move the second optical system 20 and the imaging element 36 in the direction intersecting the optical axis AX1 of the first optical system 10.
   According to this configuration, the imaging device 1 can extract the desired imaging region IA1 from the wide visual field imaging region (the wide visual field imaging region IA0, etc.) at a high speed and image it with high resolution.
(2) The first optical system 10 may be telecentric on the side of the intermediate image 18. In this case, even if the second optical system 20 is moved in the direction intersecting the optical axis AX1 of the first optical system 10, the incidence angle of the light fluxes (the light fluxes LB1, LB2, and the like) entering the second optical system 20 hardly changes. Accordingly, the second optical system 20 maintains good imaging performance and can form the final image 35 with high resolution on the imaging element 36.
(3) The maximum viewing angle of the first optical system 10 may be 170° or more. In this case, the imaging region with a wider visual field (the wide visual field imaging region IA0 or the like) can be imaged.
(4) The analyzing part 53 configured to analyze the image data of the subject generated by imaging of the imaging element 36 may be further provided.
(5) The visual field controller 54 configured to execute at least one of driving of the first driving part 24 and change of the magnification of the final image 35 based on the result analyzed by the analyzing part 53 may be further provided. According to this configuration, the desired imaging region IA1 can be extracted at a high speed and imaged with high resolution based on the information of the subject imaged by the wide visual field imaging region (the wide visual field imaging region IA0 or the like). Alternatively, the image of the subject can be formed with an appropriate size in the imaging region IA1.
(6) Based on the result analyzed by the analyzing part 53, the imaging controller 51 configured to control start and end of recording of image data generated by imaging of the imaging element 36 may be further provided. According to this configuration, it is possible to control the start and the end of the recording of the image data based on the information related to the subject such as the expression, gesture, hand waving of the imaged subject, a type of an article carried by the subject, or the like.

### (Imaging device of second embodiment)

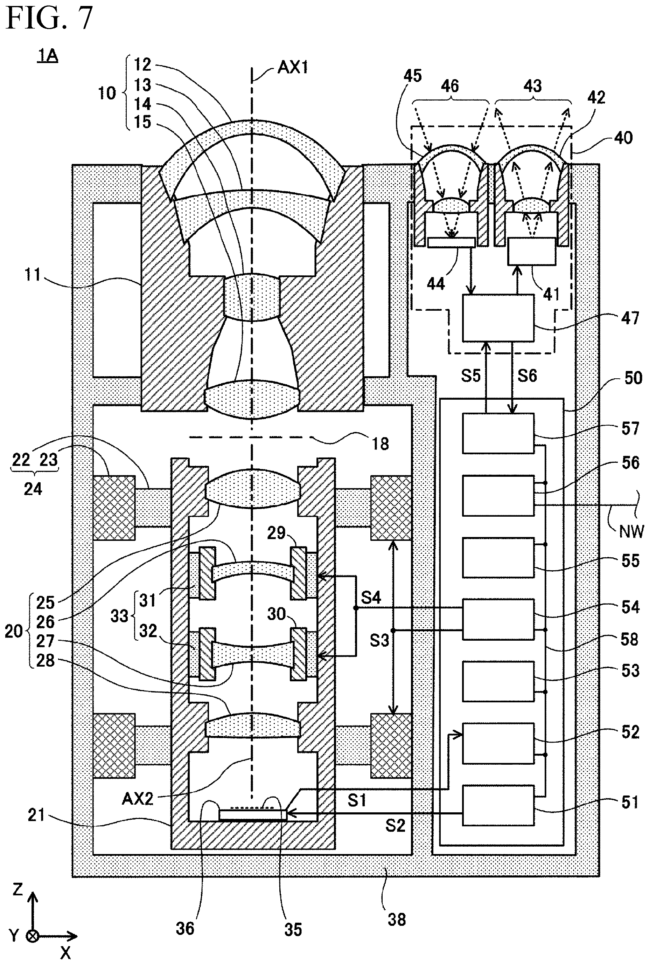

FIG. 7 is a schematic view showing an imaging device 1A of a second embodiment. Since a configuration of the imaging device 1A of the second embodiment is substantially the same as that of the imaging device 1 of the above-mentioned first embodiment, the same components are designated by the same reference signs and description thereof will be appropriately omitted.

The imaging device 1A of the second embodiment includes a distance measurement part 40 surrounded by a dashed line, in addition to the first optical system 10, the second optical system 20, the imaging element 36, and the controller 50. Then, the controller 50 includes a virtual image generating part 57.

The distance measurement part 40 measures a distance from the imaging device 1A to at least a part of a subject. The distance measurement part 40 includes, for example, a light emitting part 41, a light sending optical system 42, a light receiving part 44, a light receiving optical system 45, and a measurement part 47. According to an order from the measurement part 47, the light emitting part 41 such as a laser diode array or the like emits measurement light 43 toward the subject via the light sending optical system 42 as pulsed light, and the light receiving part 44 receives detection light 46 that is light obtained by reflecting the measurement light 43 from at least a part of the subject via the light receiving optical system 45. Further, the light receiving part 44 can also be called a detection element because it detects the detection light 46.

The measurement part 47 calculates a distance to at least a part of the subject based on a time from emission of the measurement light 43 by the light emitting part 41 to reception of the detection light 46 by the light receiving part 44 and a light speed. Further, the measurement part 47 may be provided outside the imaging device 1A. For example, the measurement part 47 is provided in a control device disposed outside the imaging device 1A and may be configured to enable communication of a signal between the respective parts of the imaging device 1A (for example, at least some of the light emitting part 41, the light receiving part 44, and the virtual image generating part 57). Further, the measurement part 47 can also be called a distance calculation part because it calculates a distance to at least a part of the subject.

As the light receiving part 44, for example, an imaging element having resolution in a 2-dimensional direction in which single photon avalanche diode are arranged in a 2-dimensional grid shape may be used. In this case, in addition to the distance to the subject, the azimuth of the subject with respect to the imaging device 1A can also be measured. Further, the measurement part 47 may be contained in the light receiving part 44. In this case, the light receiving part 44 itself may calculate a distance to at least a part of the subject. For example, when the imaging element is used in the light receiving part 44, a distance to at least a part of the subject may be calculated by a processing circuit of a part of the imaging element.

The measurement part 47 receives an order by a control signal S5 from the virtual image generating part 57 of the controller 50 and performs calculation of a distance to the subject. Then, information related to the distance to the subject is transmitted to the virtual image generating part 57 as a distance signal S6.

A viewing angle of the light sending optical system 42 and the light receiving optical system 45 may be the same as a viewing angle of the first optical system 10 or may be different from a viewing angle of the first optical system 10. As an example, the viewing angle (maximum viewing angle) of the light sending optical system 42 and the light receiving optical system 45 may be 170° or more.

A wavelength of the measurement light 43 emitted from the light emitting part 41 and the detection light 46 received by the light receiving part 44 may be a wavelength contained in a wavelength range of light received by the imaging element 36, or may be a wavelength different from the wavelength range of the light received by the imaging element 36. For example, the light received by the imaging element 36 may be visible light, and the wavelength of the measurement light 43 emitted from the light emitting part 41 may be a wavelength of an infrared region.

The light sending optical system 42 and the light receiving optical system 45 are not separate optical systems, and may be optical systems in which an optical path of the measurement light 43 emitted from the light emitting part 41 and an optical path of the detection light 46 received by the light receiving part 44 at least partially overlap each other. For example, an optical path branch element such as a half mirror or the like and one optical system may be combined, the light emitting part 41 may be disposed on one optical path branched off by the optical path branch element, and the light receiving part 44 may be disposed on the branched separate optical path.

Further, in FIG. 1, while the optical path from the first optical system 10 to the imaging element 36 via the second optical system 20 and the optical path of the measurement light 43 from the light emitting part 41 to the light sending optical system 42 or the optical path of the detection light 46 from the light receiving optical system 45 to the light receiving part 44 are separated from each other, these optical paths may partially overlap each other.

Further, the first optical system 10 and the second optical system 20 may be used as the light receiving optical system 45, and the imaging element 36 may be used as the light receiving part 44.

The light emitting part 41 is not limited to the pulsed light emission of the measurement light 43 but may emit the measurement light 43, intensity of which is modulated as time elapses. In this case, the distance measurement part 40 may measure a distance to the subject based on the phase of the temporal change of the signal corresponding to the light amount of the detection light 46 received by the light receiving part 44.

The distance measurement part 40 may measure a distance to the subject by scanning and irradiating one or a plurality of laser beams, pulsed light emission or luminous intensity of which is varied, to the subject, instead of using the imaging element having the above-mentioned resolution in the 2-dimensional direction as the light receiving part 44.

Alternatively, the distance to the subject may be measured using an optical imaging system including an imaging element having a so-called image surface phase difference type focus detecting function. Further, the distance measurement part 40 and the imaging device 1A may be separate assemblies. Further, the distance measurement part 40 may include another conventional configuration that can measure a distance to the subject.

The virtual image generating part 57 generates image data (virtual image data) when the subject is imaged at a position different from the position where the imaging device 1A is disposed based on the image data of the subject imaged by the imaging element 36 and generated by the image generating part 52 and the distance to the subject measured by the distance measurement part 40.

The virtual image generating part 57 performs communication of a signal between the imaging controller 51, the image generating part 52, the analyzing part 53, the visual field controller 54, the storage 55, and interface part in the controller 50 via the wiring 58 such as a bus or the like. The virtual image generating part 57 may be independent, that is, mechanically separated hardware.

Alternatively, the virtual image generating part 57 may be integrally configured as hardware of any one of the imaging controller 51, the image generating part 52, the analyzing part 53, the visual field controller 54, the storage 55, and the interface part 56. The virtual image generating part 57 may be constituted by hardware and software that controls it. Further, the virtual image generating part 57 may be provided outside the imaging device 1A. For example, the virtual image generating part 57 is installed in a control device disposed outside the imaging device 1A and may be configured to enable communication of a signal with the respective parts of the imaging device 1A.

The storage 55 may store the image data generated by the virtual image generating part 57 together with the image data of the subject imaged by the imaging element 36 and generated by the image generating part 52 or instead of the image data.

The interface part 56 may output the image data generated by the virtual image generating part 57 to external equipment via the network line NW or in a wireless manner together with the image data of the subject imaged by the imaging element 36 and generated by the image generating part 52 or the image data stored in the storage 55, or instead of these image data.

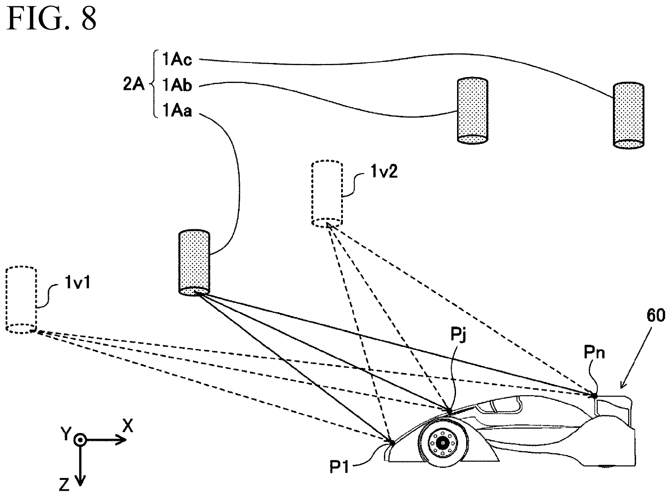

FIG. 8 is a view showing an example of a usage state of an imaging device 1Aa of the second embodiment. In FIG. 8, the imaging device 1Aa is disposed at a position having a predetermined positional relation with respect to a subject 60, for example, an automobile. The imaging device 1Aa images image data of the subject 60 using the imaging element 36. That is, the image generating part 52 generates image data of the subject 60 based on the imaging signal S1 imaged by the imaging element 36.

The distance measurement part 40 of the imaging device 1Aa measures distances and azimuths from the imaging device 1Aa to a plurality of points P1, ••, Pj, ••, Pn on the subject 60 substantially in synchronization with the above-mentioned imaging of the subject 60. Here, n is a total number of the measured points on the subject 60, and j is an arbitrary natural number as a subscript.

The virtual image generating part 57 of the controller 50 of the imaging device 1Aa calculates a 3-dimensional positional relation of the respective parts of the subject 60 with respect to the imaging device 1Aa by a conventional method based on the distances to the plurality of measured points P1 to Pn and the azimuths. For example, the virtual image generating part 57 calculates XYZ coordinate values of the respective parts (the points P1 to Pn) of the subject 60 when a position where the imaging device 1Aa is disposed is set as an origin.

The virtual image generating part 57 generates virtual image data that can be obtained when the subject is imaged from virtual imaging devices 1v1 and 1v2 located at different positions from the actual imaging device 1Aa based on the image data of the subject 60 and the XYZ coordinate values of the points P1 to Pn. For example, the position of the virtual imaging device 1v1 or the virtual imaging device 1v2 may be input to the imaging device 1a by a user as a relative position with respect to the imaging device 1Aa.

Further, the imaging device 1Ab shown in FIG. 8 constitutes the imaging system 2A of the second embodiment together with the imaging device 1Aa, and details thereof will be described below.

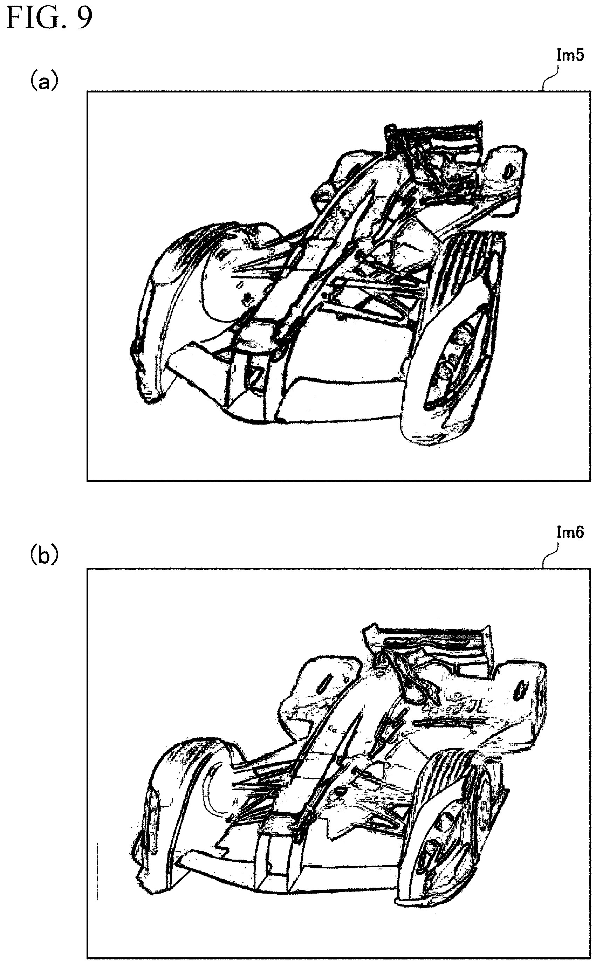

FIG. 9(a) shows an image Im5 that is an example of an image based on image data of the subject 60 generated by imaging of the imaging device 1Aa of the second embodiment, and FIG. 9(b) is a view showing a virtual image Im6 that is an example of a virtual image based on virtual image data generated by the virtual image generating part 57. The image Im5 is imaged at a close distance between the subject 60, which is an automobile as an example, and the imaging device 1Aa, so the depth perception of the subject 60 is exaggerated, i.e., the front portion appears excessively large compared to the rear portion of the automobile (the subject 60).

The virtual image Im6 shown in FIG. 9(b) is a virtual image based on the virtual image data generated by the virtual image generating part 57, which is an image corresponding to an image obtained when the subject is imaged from the virtual imaging device 1v1 located at a position farther from the subject 60 than the imaging device 1Aa. In the virtual image Im6, compared to the image lm5, it becomes a preferable image in which the depth perception of the subject is corrected.

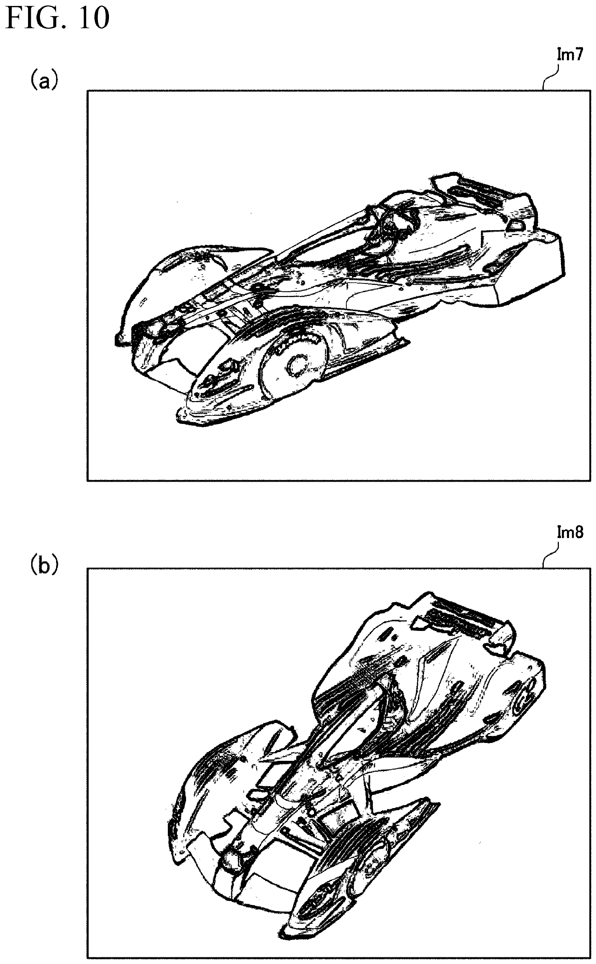

FIG. 10(a) shows an image Im7 that is an example of an image of the subject 60 imaged by the imaging device 1Aa of the second embodiment, and FIG. 10(b) is a view showing a virtual image Im8 that is an example of a virtual image based on virtual image data generated by the virtual image generating part 57. Since the image Im7 is imaged by the imaging device 1a (see FIG. 8) disposed at a position where a difference in Z position with respect to the subject 60, which is an automobile as an example, is small, it is expressed in the image Im7 that a structure of an upper surface of the subject 60 (a surface on a -Z side) is compressed.

The virtual image Im8 shown in FIG. 10(b) is a virtual image based on the virtual image data generated by the virtual image generating part 57, which is an image corresponding to the image obtained when the subject is imaged from the virtual imaging device 1v2 located closer to the subject 60 than the imaging device 1 Aa and closer to the -Z side than the imaging device 1a. In the virtual image Im8, compared to the image Im7, the subject 60 is viewed from above (-Z side), and the upper surface of the subject 60 is expressed in detail.

In summary, the virtual image generating part 57 generates image data (virtual image data) when the subject 60 is imaged from a position different from the position of the imaging device 1Aa based on the image data of the subject imaged by the imaging element 36 and the distance to at least a part of the subject 60 measured by the distance measurement part 40.

### (Effects of imaging device of second embodiment)

(7) The imaging device 1A of the second embodiment includes the distance measurement part 40 configured to measure a distance to at least a part of the subject, in addition to the imaging device 1 of the above-mentioned first embodiment. Then, a virtual image generating part configured to generate image data (virtual image data) when the subject is imaged from a position different from the position of the imaging device 1 based on the image data of the subject generated by imaging of the imaging element 36 and the distance to at least a part of the subject measured by the distance measurement part 40 is provided.

According to this configuration, the imaging device 1A of the second embodiment can generate virtual image data (the virtual images Im6 and Im8) obtained by imaging the subject from the position different from the position where the imaging device 1A is disposed actually.

The imaging device 1 of the first embodiment or the imaging device 1A of the second embodiment may not have one or more of the imaging controller 51, the image generating part 52, the analyzing part 53, the visual field controller 54, the storage 55, and the interface part 56, which are included in the controller 50 in the above-mentioned description.

For example, one or more of the imaging controller 51, the image generating part 52, the analyzing part 53, the visual field controller 54, the storage 55, and the interface part 56 may be provided outside the imaging device 1 or 1A. For example, one or more of the imaging controller 51, the image generating part 52, the analyzing part 53, the visual field controller 54, the storage 55, and the interface part 56 are provided in the control device disposed outside the imaging device 1 or 1A, and may be configured to enable communication of a signal with the respective parts of the imaging device 1 or 1A.

In the imaging device 1 of the first embodiment or the imaging device 1A of the second embodiment, the first optical system 10 and the second optical system 20 do not necessarily have to be telecentric optical systems on the side of the intermediate image 18. In addition, the second optical system 20 does not necessarily have to include the second driving part 33. Alternatively, the second optical system 20 and the imaging element 36 do not necessarily have to be held by a holding part 21.

In the imaging device 1A of the second embodiment, a part of the optical system of the distance measurement part 40 may be shared with the first optical system 10 and the second optical system 20.

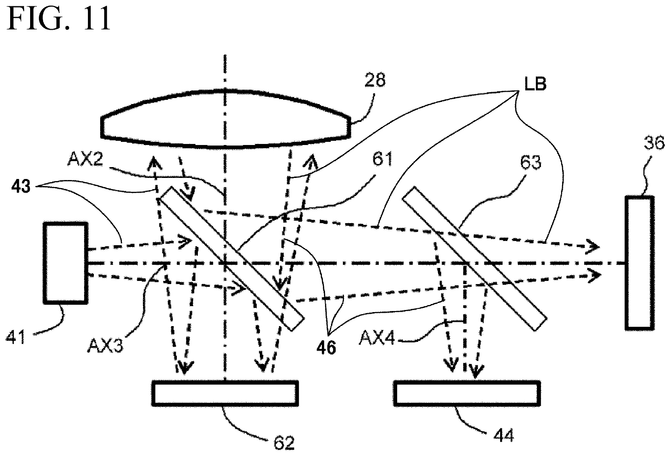

FIG. 11 is a view showing the distance measurement part 40 in which a part of the optical system is shared with the first optical system 10 and the second optical system 20. In FIG. 11, members configured to accomplish the same functions as in the above-mentioned embodiment are designated by the same reference signs.

In FIG. 11, the measurement light 43 from the light emitting part 41 that constitutes the distance measurement part 40 is emitted along an optical axis AX3 intersecting the optical axis AX2 of the second optical system 20 and reflected by a half mirror 61 inclined with respect to the optical axes AX2 and AX3. After that, the measurement light 43 is reflected by a mirror 62 located at a side opposite to the second optical system 20 in relation with the optical axis AX2, and passes through the half mirror 61 to enter the lens 28 of the second optical system 20.

The measurement light 43 entering the second optical system 20 is projected onto the subject via the lenses 27, 26 and 25, and the first optical system 10 (see FIG. 7 for all) (not shown) of the second optical system 20. The detection light 46 that is light obtained by at least partially reflecting the measurement light 43 on the subject arrives at the half mirror 61 via the first optical system 10 and the second optical system 20 (see FIG. 7 for both). Then, the detection light 46 reflected by the half mirror 61 is reflected by a half mirror 63 to arrive at the light receiving part 44 that constitutes the distance measurement part 40.

Meanwhile, light LB from the subject for forming an image on the imaging element 36 is reflected by the half mirror 61 via the first optical system 10 and the second optical system 20, and then, passes through the half mirror 63 and arrives at the imaging element 36. In this way, at least parts of the light sending optical system 42 and the light receiving optical system 45 that constitute the distance measurement part 40 may be shared with the first optical system 10 and the second optical system 20.

### (Imaging system of first embodiment)

As shown in FIG. 4, the imaging system 2 of the first embodiment includes the plurality of imaging devices 1 (1a to 1c) of the first embodiment. The plurality of imaging devices 1 (1a to 1c) that constitute the imaging system 2 perform communication therebetween via the network line NW (see FIG. 1) or in a wireless manner. The number of the imaging devices 1 included in the imaging system 2 is not limited to three shown but may be an arbitrary plural number.

In the imaging system 2, when one of the plurality of imaging devices 1a to 1c detects the interest area IA, the information related to the position of the interest area IA may be transmitted to the other of the imaging devices 1a to 1c in the imaging system 2. The information related to the position of the interest area IA shared with the plurality of imaging device 1Aa to 1Ac may be an azimuth of the subject contained in the interest area IA or may be coordinates of the interest area IA in an XYZ coordinate system virtually defined by the imaging system 2 with reference to, for example, the one imaging device 1Aa.

Accordingly, even in the other imaging devices 1b and 1c of the imaging system 2, the subject contained in the interest area IA can be easily imaged. In addition, the same subject contained in the interest area IA can be imaged and recorded from different points of view for the imaging devices 1a to 1c.

### (Imaging system of second embodiment)

As shown in FIG. 8, the imaging system 2A of the second embodiment includes the plurality of imaging devices 1A (1 Aa to 1Ac) of the second embodiment. The plurality of imaging devices 1Aa to 1Ac that constitute the imaging system 2A perform communication therebetween via the network line NW (see FIG. 7) or in a wireless manner. The number of the imaging devices 1A included in the imaging system 2A is not limited to three shown but may be an arbitrary plural number.

Even in the imaging system 2A of the second embodiment, like the imaging system 2 of the above-mentioned second embodiment, when one of the plurality of imaging devices 1 Aa to 1 Ac detects the interest area IA, information related to the position of the interest area IA may be transmitted to the other of the imaging devices 1Aa to 1 Ac in the imaging system 2A.

In the imaging system 2A of the second embodiment, based on the one imaging device 1Aa, it is possible to share not only the azimuth of the subject included in the interest area IA but also the distance of the subject. Accordingly, the other imaging devices 1Ab and 1Ac in the imaging system 2A can also more easily image the subject included in the interest area IA.

Generation of the above-mentioned virtual image data may be performed using the imaging system 2A of the second embodiment. In this case, two or more of the plurality of imaging devices 1Aa to 1ac image the subject 60 and measure a distance to at least a part of the subject 60 and an azimuth. Then, these types of information are shared with the plurality of imaging devices 1Aa to 1 ac. Then, based on these types of information, the virtual image generating part 57 included in the imaging devices 1Aa to 1Ac may generate virtual image data corresponding to the image obtained when the subject 60 is imaged from the virtual imaging device 1v1 or 1v2.

Further, the imaging device 1 of the first embodiment, the imaging device 1A of the second embodiment, the imaging system 2, or the imaging system 2A may be installed at a predetermined place such as a nursery school, a school, a medical facility, a nursing home, a conference room, a shop, a station, a park, a vending machine, a street lamp, a utility pole, a prison, a military installation, a border, a road, a park, or the like. When the imaging device 1 or 1A or the imaging system 2 or 2A is installed in a nursery school, the imaging device 1 or 1A, or the imaging system 2 or 2A may change the position or the size (the magnification of the final image 35) of the imaging region IA1 (the visual field of the imaging device 1) so as to follow a change in position or size of the interest area IA according to activities of children using, for example, parts of children's bodies as the interest area IA.

Further, when the imaging device 1 or 1A, or the imaging system 2 or 2A is installed in a nursing home, the imaging device 1 or 1A, or the imaging system 2 or 2A may change the position or the size of the imaging region IA1 so as to follow a change in position or size of the interest area IA according to a change or the like in a care recipient's posture using, for example, the care recipient's face, a part of his/her body, or the like as the interest area IA.

Further, when the imaging device 1 or 1A, or the imaging system 2 or 2A is installed in a conference room, the position or the size of the imaging region IA1 may be changed so as to follow a change in position or size of the interest area IA according to a change or the like in a meeting attendee's posture using, for example, the meeting attendee's face or the like as the interest area IA.

Further, when the imaging device 1 or 1A, or the imaging system 2 or 2A is installed in the vicinity of a ticket gate of a station, the vicinity of a passage or a doorway of a store, a vending machine, a street light, or a telephone pole, the imaging device 1 or 1A, or the imaging system 2 or 2A may change the position or the size of the imaging region IA1 so as to follow a change in position or size of the interest area 1A according to movement of a person who passes therethrough using the person as the interest area IA. Further, the imaging device 1 or 1A, or the imaging system 2 or 2A may detect features of the person who passes therethrough based on the image data of the interest area IA through the above-mentioned object detection processing or another conventional image processing.

For example, the imaging device 1 or 1A, or the imaging system 2 or 2A may detect a gender, an age, a body type (height, weight, or the like), a race, a hairstyle, clothes, a movement speed, a moving direction, and the like, of the person who passes therethough based on the image data of the interest area IA. In this case, the features of the detected person who passes therethrough can be used for market research or the like. Further, the imaging device 1 or 1A, or the imaging system 2 or 2A is not limited to the person who passes therethrough but may detect features of a moving body such as a passing vehicle or the like.

For example, the imaging device 1 or 1A, or the imaging system 2 or 2A may detect at least one of a vehicle type, a color, a movement speed, a moving direction, and the like, of the passing vehicle. Further, the imaging device 1 or 1A, or the imaging system 2 or 2A may set the wide visual field imaging region (the wide visual field imaging region IA0 or the like) until at least a part of the passing person or vehicle enters the visual field of the imaging device 1 or 1A, or the imaging system 2 or 2A, and when at least a part of the person or vehicle is inside of the visual field of the imaging device 1 or 1A, or the imaging system 2 or 2A, the imaging device 1 or 1A, or the imaging system 2 or 2A may detect the interest area IA (i.e., an image of at least a part of the passing person or vehicle) through the above-mentioned object detection processing or another conventional image processing, and may adjust the position or size of the imaging region IA1 according to the detected interest area IA.

Further, the imaging device 1 of the first embodiment, the imaging device 1A of the second embodiment, the imaging system 2, or the imaging system 2A does not need to be fixedly installed indoors or outdoors, and may be installed on a moving body such as a vehicle, a ship, an aircraft (for example, a drone), or the like.

Further, when the imaging device 1 or 1A, or the imaging system 2 or 2A is installed in an unmanned aerial vehicle such as a drone or the like, an object being searched (for example, a person, an animal, a vehicle, a ship, an aircraft, or the like) may be set as the interest area IA. For example, the imaging device 1 or 1A, or the imaging system 2 or 2A may search an object in the wide visual field imaging region (the wide visual field imaging region IA0 or the like) until the object being searched enters the visual field due to the flight of the unmanned aerial vehicle. Then, when at least a part of the object being searched enters the visual field of the imaging device 1 or 1A, or the imaging system 2 or 2A, the interest area IA (i.e., an image of at least a part of the object being searched) may be detected through the above-mentioned object detection processing or another conventional image processing, and the position or size of the imaging region IA1 may be adjusted according to the detected interest area IA. Further, the imaging device 1 or 1A, or the imaging system 2 or 2A may change the position or size of the imaging region IA1 so as to follow the change in position or size of the interest area IA according to the relative movement between the object being searched and the unmanned aerial vehicle.

Further, when the imaging device 1 or 1A, or the imaging system 2 or 2A is installed in an aggressive attacking unmanned aerial vehicle (for example, an aggressive drone) as an example of the unmanned aerial vehicle, an attacking target object (for example, a person, a vehicle, a ship, an aircraft, a building, or the like) may be set as the interest area IA. For example, the imaging device 1 or 1A, or the imaging system 2 or 2A may search for the attacking target object in the wide visual field imaging region (the wide visual field imaging region IA0 or the like) due to the flight of the unmanned aerial vehicle until the attacking target object enters the visual field.

Then, when at least a part of the attacking target object enters the visual field of the imaging device 1 or 1A, or the imaging system 2 or 2A, the interest area IA (i.e., an image of at least a part of the attacking target object) may be detected through the above-mentioned object detection processing or another conventional image processing, and the position or size of the imaging region IA1 may be adjusted according to the detected interest area IA. The aggressive attacking unmanned aerial vehicle may approach the attacking target object and attack the attacking target object based on the position or size of the interest area IA on the image until it enters an attack range of the aggressive attacking unmanned aerial vehicle. Further, the imaging device 1 or 1A, or the imaging system 2 or 2A may change the position or size of the imaging region IA1 so as to follow the change in position or size of the interest area IA according to the relative movement between the attacking target object and the unmanned aerial vehicle.

For example, while it is considered that two cameras (a wide angle camera and a telephoto camera with gimbal) are mounted in the unmanned aerial vehicle such as a drone or the like, due to restrictions such as weight capacity and transportable size, objects mounted on the unmanned aerial vehicle are required to be small and lightweight, which is not desirable. Meanwhile, the imaging device 1 or 1A, or the imaging system 2 or 2A, which can perform wide-angle and telephoto imaging with a single device, is smaller and lighter than two cameras, making it suitable for installation in the unmanned aerial vehicle or the like.

In addition, the imaging target of the imaging device 1 or 1A, or the imaging system 2, the imaging system 2A is not limited to the above-mentioned person or animal but may be an industrial machine such as a machine tool or the like. In this case, the imaging device 1 or 1A, or the imaging system 2 or 2A analyzes whether the industrial machine is normally operated based on the image data obtained through imaging. Then, when an abnormality is found in the shape or operation of the industrial machine, the imaging device 1 or 1A, or the imaging system 2 or 2A takes measures such as transmitting the image data of the part related to the abnormality to external equipment.

Further, the imaging device 1 or 1A, or the imaging system 2 or 2A may be installed in a working chamber of the machine tool (a space in which a workpiece is machined by the working tool). In this case, for example, a region containing at least parts of a working tool attached to a main shaft, a workpiece placed on a stage, and a working point of the workpiece by the working tool may be set as the interest area 1A.

The imaging device 1 or 1A, or the imaging system 2 or 2A may change the position or size (the magnification of the final image 35) of the imaging region IA1 (the visual field of the imaging device 1) so as to follow the change in position or size of the interest area IA according to the relative movement between the main shaft and the workpiece (stage). Further, the imaging device 1 or 1A, or the imaging system 2 or 2A may detect the movement of the interest area IA and the change in size and change the position or size of the imaging region lAl (the visual field of the imaging device 1) by appropriately combining and executing the processings described in the above-mentioned embodiments.

Further, the imaging device 1 or 1A, or the imaging system 2 or 2A may detect at least one of a distance between the working tool and the workpiece, a length (abrasion loss) of the working tool, a shape of the working tool, damage (breakage) to the working tool, a protrusion amount of the working tool, a shape of the workpiece, a positional shift of the workpiece (with respect to a reference position of the stage), a shape of a cutting chip, an amount of the cutting chip, and an amount of a cutting fluid applied to a working portion based on the image data of the interest area IA generated by the conventional image processing.

Further, for example, the imaging device 1 or 1A, or the imaging system 2 or 2A, may be installed on at least one place of a wall surface of the working chamber, a ceiling of the working chamber, a main shaft head, and a stage. As an example, the imaging device 1 or 1A may be installed on the main shaft.

Further, the imaging device 1 or 1A may be configured to be attachable and detachable to/from the main shaft via a shank. In this case, the imaging device 1 or 1A attached to the main shaft may be exchanged with an arbitrary working tool by a working tool exchange device. In addition, the imaging device 1 or 1A may be stored in the working tool exchange device, and the working tool attached to the main shaft may be exchanged with the imaging device 1 or 1A.

Further, when the imaging device 1 is attached to the main shaft, the imaging device 1 attached to the main shaft may have a configuration in which the second optical system 20, the second housing 21, the first driving part 24, the second driving part 33, and the visual field controller 54 are eliminated from the configuration shown in FIG. 1, and the imaging element 36 is disposed on the image surface of the imaged subject (i.e., the intermediate image forming region 19) by the first optical system 10 (i.e., the wide viewing angle imaging device that cannot change the movement or size of the visual field). In the case of this configuration, the analyzing part 53 or the interface part 56 may be removed. Further, the image generating part 52 may be provided outside the imaging device 1. For example, the image generating part 52 is installed in the control device disposed outside the imaging device 1 and may be configured to enable communication of a signal with the respective parts of the imaging device 1 (for example, the imaging element 36).

Further, when the imaging device 1A is attached to the main shaft, the imaging device 1A attached to the main shaft may have a configuration as shown in FIG. 7 or FIG. 11. In this case, the imaging device 1A attached to the main shaft may have a configuration in which the second optical system 20, the second housing 21, the first driving part 24, the second driving part 33, and the visual field controller 54 are eliminated from the configuration shown in FIG. 7 or FIG. 11, and the imaging element 36 is disposed on the image surface of the subject (i.e., the intermediate image forming region 19) imaged by the first optical system 10 (i.e., the wide viewing angle imaging device unable of movement of the visual field and change of the size, and capable of measurement of the distance).

In the case of this configuration, the analyzing part 53, and the interface part 56, the virtual image generating part 57 may be eliminated. Further, the measurement part 47 may be provided outside the imaging device 1A. For example, the measurement part 47 is provided in the control device disposed outside the imaging device 1A and may be configured to enable communication of a signal with the respective parts of the imaging device 1A (for example, at least a part of the light emitting part 41, the light receiving part 44, and the virtual image generating part 57).

Further, the image generating part 52 may be provided outside the imaging device 1A. For example, the image generating part 52 is provided in the control device disposed outside the imaging device 1A and may be enable communication of a signal with the respective parts of the imaging device 1A (for example, the imaging element 36).

In addition, the imaging device 1 or 1A, or the imaging system 2 or 2A may be installed at two places or more of a wall surface of the working chamber, a ceiling of the working chamber, a main shaft head, and a stage. As an example, they may be installed at different places on the wall surface of the working chamber, or may be installed at one place or more on the wall surface of the working chamber and one place or more on the ceiling of the working chamber.

When the plurality of the imaging devices 1 or 1A, or the imaging systems 2 or 2A are installed in this way, they may be installed such that the interest area in the working chamber can be imaged in different directions (can be imaged from different points of view). Further, when the plurality of the imaging devices 1 or 1A, or the imaging systems 2 or 2A are installed, they may be installed such that maximum visual field regions thereof partially overlap each other.

Further, the imaging device 1 or 1A, or the imaging system 2 or 2A may be installed in a portion different from the working chamber of the machine tool. For example, it may be installed in the working tool exchange device configured to exchange the working tool attached to the main shaft of the working chamber with another type of working tool.

Further, the working tool exchange device may be, for example, an automatic working tool exchange device (automatic tool changer: ATC).

In addition, the imaging device 1 or 1A, or the imaging system 2 or 2A may be installed in a light processing apparatus configured to machine a workpiece with processing light. In this case, the imaging device 1 or 1A, or the imaging system 2 or 2A may detect a working part on the workpiece (a place irradiated with processing light) or the like based on the image data of the interest area 1A generated by conventional image processing. Further, when the light processing apparatus is a 3-dimensional laminating molding device, the imaging device 1 or 1A, or the imaging system 2 or 2A may detect a supply state of a molding material based on the image data of the interest area IA generated by the conventional image processing.

### (Effects of imaging systems of first embodiment and second embodiment)

(9) The imaging system 2 of the above-mentioned first embodiment and second embodiment includes the plurality of the imaging devices 1 (1a to 1c) of the first embodiment and the plurality of the imaging devices 1A (1Aa to 1 Ac) of the second embodiment, and at least one imaging device of the plurality of the imaging devices 1a to 1c and 1Aa to 1Ac images a subject using information from the imaging device different from the at least one imaging device.

According to this configuration, for example, the information related to the position of the interest area IA specified from the subject by the one imaging device 1a or 1Aa is shared with the other the imaging devices 1b and 1c or 1Ab and 1Ac, and even in the imaging devices 1b, lc, 1Ab and 1Ac, the subject contained in the interest area 1A can be easily imaged. Alternatively, the imaging devices 1a to 1c and 1Aa to 1Ac can image and record the same subject included in the interest area IA from different viewpoints.

Further, in the above-mentioned example, there is one interest area IA, but there may be a plurality of interest areas IA.

Although various embodiments and variants have been described above, the present invention is not limited to these contents. In addition, each embodiment and variant may be applied individually or in combination. Other aspects that can be considered within the technical scope of the present invention are also included within the scope of the present invention.

### (Supplementary Statements)

It will be understood by those skilled in the art that the plurality of embodiments or variants thereof described above are specific examples of the following aspects.

### (Claim 1)

An imaging device including: a first optical system configured to form an intermediate image of a subject, a second optical system configured to form a final image by re-imaging at least a part of the intermediate image, an imaging element configured to image the final image, and a driving part configured to move at least one of the first optical system, the second optical system and the imaging element in a direction intersecting an optical axis of the first optical system.

### (Claim 2)

The imaging device according to claim 1, wherein the first optical system is telecentric at a side of the intermediate image.

### (Claim 3)

The imaging device according to claim 2, wherein a difference between an angles of a main beam of light, which advances from the first optical system toward a first place of an intermediate image forming region, with respect to the optical axis of the first optical system and an angle of a main beam of light, which advances from the first optical system toward a second place of the intermediate image forming region at which a distance of the optical axis of the first optical system is different from the first place, with respect to the optical axis of the first optical system is 1° or less.

### (Claim 4)

The imaging device according to claim 1 or claim 2, wherein the second optical system is telecentric at a side of the first optical system.

### (Claim 5)

The imaging device according to claim 4, wherein a difference between an angle of a main beam from light, which advances from a first place on an intermediate image forming region toward the second optical system, with respect to an optical axis of the second optical system and an angle of a main beam of light, which advances from a second place on the intermediate image forming region, at which a distance from the optical axis of the second optical system is different from the first place, toward the second optical system, with respect to the optical axis of the second optical system is 1° or less.

### (Claim 6)

The imaging device according to any one of claims 1 to 5, wherein a difference between an angle of a main beam of light from the first optical system with respect to the optical axis of the first optical system and an angle of a main beam of light entering the second optical system with respect to an optical axis of the second optical system is 1° or less.

### (Claim 7)

The imaging device according to any one of claims 1 to 6, wherein a maximum viewing angle of the first optical system is 170° or more.

### (Claim 8)

The imaging device according to any one of claims 1 to 7, wherein the driving part moves the second optical system and the imaging element in a direction intersecting the optical axis of the first optical system.

### (Claim 9)

The imaging device according to claim 8, further including a holding part configured to hold the second optical system and the imaging element, wherein the driving part moves the holding part in a direction intersecting the optical axis of the first optical system.

### (Claim 10)

The imaging device according to claim 8 or 9, wherein the driving part moves the second optical system and the imaging element in a direction parallel to a surface perpendicular to the optical axis of the first optical system.

### (Claim 11)

The imaging device according to any one of claims 1 to 10, wherein the second optical system is able to change a magnification of the final image.

### (Claim 12)

The imaging device according to claim 11, wherein, when the second optical system includes a plurality of optical members and when the driving part is set as a first driving part, the imaging device further includes a second driving part configured to move at least one optical member of the plurality of optical members along the optical axis of the second optical system, and the second optical system changes the magnification of the final image by driving the second driving part.

### (Claim 13)

The imaging device according to claim 11 or 12, further including a visual field controller configured to execute at least one of driving of the driving part and changing of the magnification of the final image based on the image data generated by imaging of the imaging element.

### (Claim 14)

The imaging device according to claim 13, further including an imaging controller configured to control start and end of recording of the image data generated by imaging of the imaging element based on the image data generated by imaging of the imaging element.

### (Claim 15)

The imaging device according to claim 13 or 14, wherein the visual field controller drives the driving part such that an interest area of the subject is not lost from a visual field of the imaging device when at least one of the subject and the imaging device is moved.

### (Claim 16)

The imaging device according to any one of claims 13 to 15, wherein the visual field controller lowers a magnification of the final image when at least one of the subject and the imaging device is moved and the interest area of the subject is lost from the visual field of the imaging device.

### (Claim 17)

The imaging device according to any one of claims 13 to 16, wherein the visual field controller changes a magnification of the final image according to a size of the interest area of the subject with respect to the visual field of the imaging device.

### (Claim 18)

The imaging device according to claim 17, wherein the visual field controller changes a magnification of the final image such that the size of the interest area of the subject with respect to the visual field of the imaging device is constant.

### (Claim 19)

The imaging device according to any one of claims 13 to 19, further including an analyzing part configured to analyze image data generated by imaging of the imaging element, wherein, when the analyzing part is unable to recognize an image of at least a part of the subject, the visual field controller executes at least one of the driving of the driving part and the changing of the magnification of the final image.

### (Claim 20)

The imaging device according to claim 19, wherein the visual field controller lowers the magnification of the final image.

### (Claim 21)

The imaging device according to claim 19, wherein the visual field controller increases the magnification of the final image.

### (Claim 22)

The imaging device according to claim 13, wherein the visual field controller executes driving of the driving part and changing of the magnification of the final image based on the image data generated by imaging of the imaging element.

### (Claim 23)

The imaging device according to any one of claims 1 to 10, further including a visual field controller configured to drive the driving part based on the image data generated by imaging of the imaging element.

### (Claim 24)

The imaging device according to claim 23, wherein the visual field controller controls start and end of recording of the image data generated by imaging of the imaging element based on the image data generated by imaging of the imaging element.

### (Claim 25)

The imaging device according to claim 23 or 24, wherein the visual field controller drives the driving part such that the interest area of the subject is not lost from the visual field of the imaging device when any one of the subject and the imaging device is moved.

### (Claim 26)

The imaging device according to any one of claims 1 to 25, further including an analyzing part configured to analyze the image data of the subject generated by imaging of the imaging element.

### (Claim 27)

An imaging device including: an imaging element, a first optical system configured to form an intermediate image of a subject, and a second optical system configured to form a final image on the imaging element by re-imaging at least a part of the intermediate image, wherein, a center position of a portion of the intermediate image re-imaged on the imaging element by the second optical system is variable.

### (Claim 28)

The imaging device according to claim 27, wherein the second optical system is able to change the magnification of the final image, and a size of a portion of the intermediate image re-imaged on the imaging element by the second optical system is variable.

### (Claim 29)

An imaging device including: a light source configured to emit measurement light to measure a distance to the subject, an optical system having a maximum viewing angle of 170° or more and configured to irradiate the subject with the measurement light from the light source, a detection element configured to detect detection light from the subject generated by irradiating the subject with the measurement light via the optical system, and an imaging element configured to image an image of the subject imaged by the optical system.

### (Claim 30)

The imaging device according to claim 29, wherein an optical path of the detection light from the optical system detected by the detection element and an optical path of light from the optical system received by the imaging element at least partially overlap each other.

### (Claim 31)

The imaging device according to claim 29 or 30, wherein a wavelength of the detection light detected by the detection element is different from a wavelength of light received by the imaging element.

### (Claim 32)

An imaging system including: the imaging device according to any one of claims 29 to 31, a distance calculation part configured to calculate a distance to at least a part of the subject based on the detection result of the detection element of the imaging device, and a virtual image generating part configured to generate image data when the subject is imaged from a position different from the position of the imaging device based on the image data of the subject generated by imaging of the imaging element of the imaging device and the calculation result of the distance to at least a part of the subject by the distance calculation part.

### (Claim 33)

An imaging system including: a light source configured to emit measurement light, an optical system having a maximum viewing angle of 170° or more and configured to irradiate the subject with the measurement light from the light source, a detection element configured to detect detection light from the subject generated by irradiating the subject with the measurement light via the optical system, a distance calculation part configured to calculate a distance to at least a part of the subject based on the detection light detected by the detection element, and an imaging element configured to image an image of the subject imaged by the optical system.

### (Claim 34)

The imaging system according to claim 33, wherein an optical path of the detection light from the optical system detected by the detection element and an optical path of light from the optical system received by the imaging element at least partially overlap each other.

### (Claim 35)

The imaging device according to claim 33 or 34, wherein a wavelength of the detection light detected by the detection element is different from a wavelength of light received by the imaging element.

### (Claim 36)

The imaging system according to any one of claims 33 to 35, further including a virtual image generating part configured to generate image data when the subject is imaged from a position different from the position of the imaging element based on the image data of the subject generated by imaging of the imaging element and the distance calculation result to at least a part of the subject by the distance calculation part.

### (Claim 37)

An imaging device including: a light source configured to emit measurement light, an optical system having a maximum viewing angle of 170° or more and configured to irradiate the subject with the measurement light from the light source, a detection element configured to detect detection light from the subject generated by irradiating the subject with the measurement light via the optical system, and an imaging element configured to image an image of the subject imaged by the optical system, wherein a distance to at least a part of the subject is calculated on the detection light.

### (Claim 38)

The imaging device according to claim 37, wherein an optical path of the detection light from the optical system detected by the detection element and an optical path of light from the optical system received by the imaging element at least partially overlap each other.

### (Claim 39)

The imaging device according to claim 37 or 38, wherein a wavelength of the detection light detected by the detection element is different from a wavelength of light received by the imaging element.

### (Claim 40)

An imaging system including: the imaging device according to any one of claims 37 to 39, and a virtual image generating part configured to generate image data when the subject is imaged from a position different from the position of the imaging device based on the image data of the subject generated by imaging of the imaging element of the imaging device and the calculation result of the distance to at least a part of the subject by the imaging device.

### (Claim 41)

An imaging system including: an imaging element configured to image an image of a subject, a distance measurement part configured to measure a distance to at least a part of the subject, and a virtual image generating part configured to generate image data when the subject is imaged from a position different from the position of the imaging device based on the image data of the subject generated by imaging of the imaging element and the calculation result of the distance to at least a part of the subject by the distance measurement part.

### [Reference Signs List]

1, 1a to 1c Imaging device
2 Imaging system
10 First optical system
12 to 15 Lenses
18 Intermediate image
19 Intermediate image forming region
20 Second optical system
24 First driving part
25 to 28 Lenses
35 Final image
36 Imaging element
38 Housing
40 Distance measurement part
41 Light emitting part
42 Light receiving part
43 Light sending lenses
44 Light receiving lenses
47 Measurement part
50 Controller
51 Imaging controller
52 Image generating part
53 Analyzing part
54 Visual field controller
55 Storage
56 Interface part
57 Virtual image generating part
IA0 Wide visual field imaging region
IA1 Imaging region

## Claims

1. An imaging device comprising:
a first optical system configured to form an intermediate image of a subject;
a second optical system that is an optical system configured to form a final image by re-imaging at least a part of the intermediate image and that is configured to change a magnification of the final image;
an imaging element configured to image the final image; and
a driving part configured to move the second optical system and the imaging element in a direction intersecting an optical axis of the first optical system.

2. The imaging device according to claim 1, wherein the first optical system is telecentric at a side of the intermediate image.

3. The imaging device according to claim 2, wherein a difference between an angle of a main beam of light, which advances from the first optical system toward a first place on an intermediate image forming region, with respect to the optical axis of the first optical system and an angle of a main beam of light, which advances from the first optical system toward a second place on the intermediate image forming region at which a distance from the optical axis of the first optical system is different from the first place, with respect to the optical axis of the first optical system is 1° or less.

4. The imaging device according to any one of claims 1 to 3, wherein the second optical system is telecentric at a side of the first optical system.

5. The imaging device according to claim 4, wherein a difference between an angle of a main beam of light, which advances from a first place on an intermediate image forming region toward the second optical system, with respect to an optical axis of the second optical system and an angle of a main beam of light, which advances from a second place on the intermediate image forming region, at which a distance from the optical axis of the second optical system is different from the first place, toward the second optical system, with respect to the optical axis of the second optical system is 1 ° or less.

6. The imaging device according to any one of claims 1 to 5, wherein a difference between an angle of a main beam of light from the first optical system with respect to the optical axis of the first optical system and an angle of a main beam of light entering the second optical system with respect to an optical axis of the second optical system is 1° or less.

7. The imaging device according to any one of claims 1 to 6, wherein a maximum viewing angle of the first optical system is 170° or more.

8. The imaging device according to any one of claims 1 to 7, wherein, when the driving part is set as a first driving part,
the second optical system includes a plurality of optical members, and further includes a second driving part configured to move at least one optical member of the plurality of optical members along an optical axis of the second optical system, and
the second optical system changes the magnification of the final image by driving the second driving part.

9. The imaging device according to any one of claims 1 to 8, comprising a holding part configured to hold the second optical system and the imaging element,
wherein the driving part moves the holding part in a direction intersecting the optical axis of the first optical system.

10. The imaging device according to any one of claims 1 to 9, wherein the driving part moves the second optical system and the imaging element in a direction parallel to a surface perpendicular to the optical axis of the first optical system.

11. The imaging device according to any one of claims 1 to 10, further comprising an analyzing part configured to analyze an image data of the subject generated by the imaging of the imaging element.

12. The imaging device according to claim 11, further comprising a visual field controller configured to execute at least one of driving of the driving part and changing of the magnification of the final image based on a result analyzed by the analyzing part.

13. The imaging device according to claim 11 or 12, further comprising an imaging controller configured to control start and end of recording of the image data imaged by the imaging element based on a result analyzed by the analyzing part.

14. The imaging device according to any one of claims 1 to 13, further comprising a distance measurement part configured to measure a distance to at least a part of the subject.

15. The imaging device according to claim 14, wherein the distance measurement part includes:
a light emitting part configured to irradiate the subject with light;
a light receiving part configured to receive light emitted from the light emitting part and reflected by at least a part of the subject; and
a measurement part configured to measure a distance to at least a part of the subject according to a time until the light emitted from the light emitting part is reflected by at least the part of the subject and is received by the light receiving part.

16. The imaging device according to claim 14 or 15, further comprising a virtual image generating part configured to generate image data when the subject is imaged from a position different from the position of the imaging device based on image data of the subject generated by the imaging of the imaging element and the distance to at least the part of the subject measured by the distance measurement part.

17. An imaging system comprising a plurality of the imaging devices according to any one of claims 1 to 16,
wherein at least one image device of the plurality of the imaging devices images the subject using information from the imaging device different from the at least one imaging device.
